# EUROPEAN PATENT SPECIFICATION

(11) **EP 4 160 996 B1**
(45) Date of publication and mention of the grant of the patent: **27.08.2025**
(21) Application number: 21830087.9
(22) Date of filing: 18.06.2021
(51) Int. Cl.: H04L 41/0663, H04L 41/0695

(54) **SWITCHING THE OPERATION STATE OF A MANAGEMENT DEVICE**
UMSCHALTEN DES BETRIEBSZUSTANDS EINER VERWALTUNGSVORRICHTUNG
COMMUTATION DE L'ÉTAT DE FONCTIONNEMENT D'UN DISPOSITIF DE GESTION

(30) Priority: 24.06.2020 CN 202010590816
(43) Date of publication of application: 05.04.2023
(73) Proprietor: Huawei Technologies Co., Ltd., Longgang District, Shenzhen, Guangdong 518129 (CN)
(72) Inventor: HU, Changwen, Shenzhen, Guangdong 518129 (CN)
(74) Representative: Gill Jennings & Every LLP
(86) International application number: PCT/CN2021/101029
(87) International publication number: WO 2021/259171

(56) References cited:
- CN-A- 105 487 413
- CN-A- 106 789 246
- CN-A- 109 218 096
- CN-A- 109 586 951
- CN-A- 111 162 940
- US-A1- 2014 173 084
- US-A1- 2016 304 107

## Description

### TECHNICAL FIELD

This application relates to the field of communications technologies, and in particular, to a running status switching method, an apparatus, an active/standby management system, and a network system.

### BACKGROUND

An active/standby management system usually includes two management apparatuses connected to each other. In the two management apparatuses, a running status of one management apparatus is an active state, a running status of the other management apparatus is a standby state, and the management apparatus whose running status is the active state manages network elements managed by the active/standby management system.

The two management apparatuses in the active/standby management system are both connected to a third-party apparatus outside the active/standby management system. The two management apparatuses may switch running statuses by using the third-party apparatus, so as to switch one management apparatus from the active state to the standby state, and switch the other management apparatus from the standby state to the active state.

However, switching of the running status of the management apparatus in the active/standby management system needs to rely on a third-party apparatus, which has relatively low flexibility.

CN109586951A discloses a fault transfer method and device, electronic equipment and a readable storage medium. CN109218096A discloses a SCADA real-time library access system based on main-standby redundancy, which comprises a service system, a SCADA main system and a SCADA standby system which are redundant each other.

### SUMMARY

The present invention is defined in the appended independent claims to which reference should be made. Advantageous features are set out in the appended dependent claims.

### BRIEF DESCRIPTION OF DRAWINGS

FIG. 1 is a schematic diagram of a structure of a network system according to an embodiment of this application;
FIG. 2 is a flowchart of a running status switching method according to an embodiment of this application;
FIG. 3 is a schematic diagram of a structure of a first management apparatus according to an embodiment of this application; and
FIG. 4 is a schematic diagram of a structure of another first management apparatus according to an embodiment of this application.

### DESCRIPTION OF EMBODIMENTS

To make principles and technical solutions of this application clearer, the following further describes implementations of this application in detail with reference to the accompanying drawings.

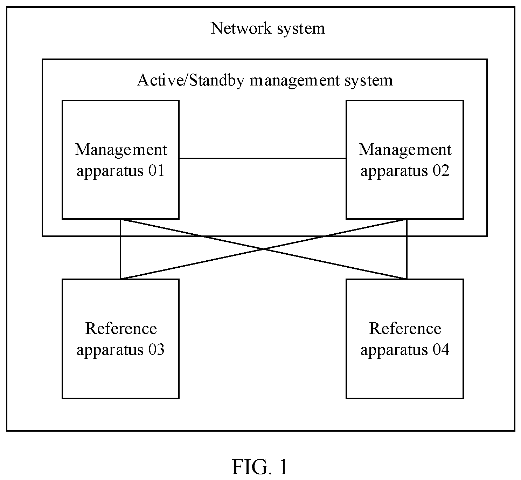

FIG. 1 is a schematic diagram of a structure of a network system according to an embodiment of this application. As shown in FIG. 1, the network system includes an active/standby management system including a plurality of management apparatuses (for example, a management apparatus 01 and a management apparatus 02 in FIG. 1), and at least one reference apparatus (for example, a reference apparatus 03 and a reference apparatus 04 in FIG. 1) managed by the active/standby management system. It may be understood that the at least one reference apparatus may be all reference apparatuses managed by the active/standby management system, or may be some reference apparatuses managed by the active/standby management system, and the network system may further include another apparatus (different from the reference apparatus) managed by the active/standby management system. This is not limited in this embodiment of this application.

In this embodiment of this application, the management apparatus may be a server, a server cluster, a virtual machine, a container cloud, or the like; and the reference apparatus may be a router, a switch, a server, a server cluster, a container cloud, a network element, an internet of things (Internet of Things, IoT) device, or the like; or both the management apparatus and the reference apparatus each are a circuit board (also referred to as a board). The apparatuses in the network system may be located in one network domain or a plurality of network domains. The network domain may be any network domain such as an internet protocol (internet protocol, IP) network domain, an optical network domain, or an access network domain.

The management apparatuses in the active/standby management system are all connected (for example, in a wired connection or wireless connection manner) to the reference apparatus. The reference apparatus may be an apparatus that is southbound connected to the management apparatus. The reference apparatuses may not be connected to each other, or may be connected to each other (for example, in a wired connection or wireless connection manner). In the plurality of management apparatuses in the active/standby management system, there is a management apparatus (for example, the management apparatus 01 in FIG. 1) whose running status is an active state and a management apparatus (for example, the management apparatus 02 in FIG. 1) whose running status is a standby state. In addition, the management apparatus whose running status is the active state in the plurality of management apparatuses manages the reference apparatus. For example, when managing the reference apparatus, the management apparatus whose running status is the active state may send a control command to the reference apparatus, so that the reference apparatus executes the control command, thereby managing the reference apparatus. The management apparatus whose running status is the active state may further collect some information of the reference apparatus, and generate the control command based on the information.

It may be understood that, in FIG. 1, only an example in which there is one management apparatus whose running status is the active state and one management apparatus whose running status is the standby state in the active/standby management system is used for illustration. Optionally, there may be more than one management apparatus whose running status is the standby state in the active/standby management system.

In addition, the plurality of management apparatuses are connected to each other (for example, in a wired connection or wireless connection manner). The management apparatus whose running status is the active state synchronizes local data to the management apparatus whose running status is the standby state, so that the management apparatus whose running status is the standby state can continue to effectively manage the reference apparatus after switching the running status to the active state.

The management apparatuses in the active/standby management system are usually further connected to a third-party apparatus (not shown in FIG. 1) outside the active/standby management system. The management apparatus may switch the running status with coordination and cooperation of the third-party apparatus. However, the management apparatus needs to rely on the third-party apparatus to switch the running status, and as a result this running status switching solution has relatively low deployment flexibility. In addition, costs and complexity of deploying and controlling the third-party apparatus are relatively high.

A network system provided in embodiments of this application does not include a third-party apparatus, and a management apparatus in an active/standby management system can switch a running status without relying on the third-party apparatus, which can improve flexibility, and avoid problems of relatively high costs and complexity caused by deploying and controlling the third-party apparatus.

The following further describes, with reference to a running status switching method provided in this application, functions of the management apparatus in the active/standby management system provided in this application.

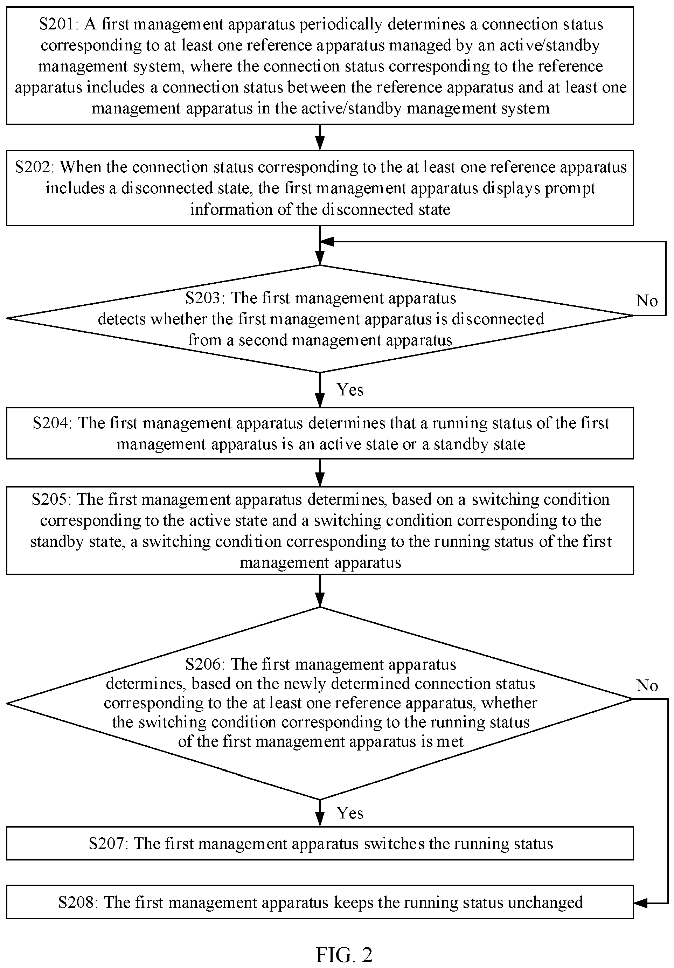

The running status switching method provided in embodiments of this application may be applied to a first management apparatus, and the first management apparatus is any management apparatus in the active/standby management system. For a process in which another management apparatus (for example, a second management apparatus) in the active/standby management system switches a running status, refer to a process in which the first management apparatus switches the running status. For example, FIG. 2 is a flowchart of a running status switching method according to an embodiment of this application. As shown in FIG. 2, the method may include the following steps.

S201: A first management apparatus periodically determines a connection status corresponding to at least one reference apparatus managed by an active/standby management system, where the connection status corresponding to the reference apparatus includes a connection status between the reference apparatus and at least one management apparatus in the active/standby management system.

The at least one management apparatus includes the first management apparatus, and the at least one management apparatus may further include another management apparatus. In this embodiment of this application, an example in which the at least one management apparatus includes each management apparatus in the active/standby management system is used. In this case, in S201, the first management apparatus needs to periodically determine a connection status between each management apparatus in the active/standby management system and the at least one reference apparatus.

The at least one reference apparatus in the active/standby management system may be all reference apparatuses managed by the active/standby management system, or may be some reference apparatuses managed by the active/standby management system.

The at least one reference apparatus may be set by a staff member in the first management apparatus, or may be determined by the first management apparatus, or may be notified to the first management apparatus after being determined by another management apparatus (for example, a second management apparatus). This is not limited in this embodiment of this application. If the at least one reference apparatus is determined by the first management apparatus, the first management apparatus may notify another management apparatus (for example, a second management apparatus) of the at least one reference apparatus determined by the first management apparatus.

In S201, the first management apparatus may continuously determine the connection status corresponding to the at least one reference apparatus. In this embodiment of this application, an example in which the first management apparatus periodically determines these connection statuses is used. Certainly, the first management apparatus may aperiodically determine these connection statuses. This is not limited in this embodiment of this application either.

S202: When the connection status corresponding to the at least one reference apparatus includes a disconnected state, the first management apparatus displays prompt information of the disconnected state.

The first management apparatus may detect whether the connection statuses determined in S201 include the disconnected state. Once a connection status between a management apparatus and a reference apparatus is the disconnected state, the first management apparatus may display prompt information that the connection status between the management apparatus and the reference apparatus is the disconnected state. A staff member can maintain the connection between the management apparatus and the reference apparatus in time based on the prompt information. This can avoid a case in which management of the reference apparatus and subsequent running status switching are affected because the management apparatus is disconnected from the reference apparatus.

For example, the first management apparatus may display the prompt information in a plurality of manners. For example, when the first management apparatus includes a display, the first management apparatus may display the prompt information on the display; when the first management apparatus includes a speaker, the first management apparatus may play the prompt information by using the speaker; or when the first management apparatus includes an indicator, the first management apparatus may display the prompt information by blinking the indicator.

It may be understood that, in this embodiment of this application, that the first management apparatus displays the prompt information by the first management apparatus is used as an example. Certainly, the first management apparatus may alternatively display the prompt information by using another apparatus (for example, an apparatus such as a mobile phone or a computer of the staff member). For example, the first management apparatus sends the prompt information to the another apparatus, and controls the another apparatus to display the prompt information.

S203: The first management apparatus detects whether the first management apparatus is disconnected from a second management apparatus. When the first management apparatus is disconnected from the second management apparatus, S204 is performed; or when the first management apparatus is not disconnected from the second management apparatus, S203 is performed.

The first management apparatus and the second management apparatus may be management apparatuses whose running statuses are an active state and a standby state in the active/standby management system. The first management apparatus and the second management apparatus need to establish a connection when running, so that a management apparatus whose running status is the active state in the two management apparatuses synchronizes, through the connection, running data to the other management apparatus whose running status is the standby state.

In S203, the first management apparatus needs to detect whether the first management apparatus is disconnected from the second management apparatus. When determining that the first management apparatus is disconnected from the second management apparatus, the first management apparatus may perform S204 to S208 to switch a running status. Optionally, a trigger condition for performing S204 to S208 by the first management apparatus may not include that the first management apparatus is disconnected from the second management apparatus. For example, the first management apparatus may periodically (or aperiodically) perform S204 to S208.

Optionally, when the trigger condition for performing S204 to S208 by the first management apparatus includes that the first management apparatus is disconnected from the second management apparatus, if the first management apparatus is disconnected from the second management apparatus, the first management apparatus cannot negotiate with the second management apparatus. In this case, the first management apparatus can also switch the running status by using a solution of S204 to S208. If the first management apparatus is not disconnected from the second management apparatus, the first management apparatus may negotiate with the second management apparatus to switch the running status.

S204: The first management apparatus determines that the running status of the first management apparatus is an active state or a standby state.

Optionally, the first management apparatus may include a register configured to store the current running status of the first management apparatus. When being started, the first management apparatus may select the running status from the active state and the standby state to start and run, and the register records the current running status of the first management apparatus. The first management apparatus may determine, by reading a status value in the register, whether the running status of the first management apparatus is the active state or the standby state. For example, when the status value in the register is 1, it indicates that the running status of the first management apparatus is the active state; or when the status value in the register is 0, it indicates that the first management apparatus is the standby state.

S205: The first management apparatus determines, based on a switching condition corresponding to the active state and a switching condition corresponding to the standby state, a switching condition corresponding to the running status of the first management apparatus.

The first management apparatus can obtain the switching condition corresponding to the active state and the switching condition corresponding to the standby state. For example, the two switching conditions are both stored in the first management apparatus. After determining the running status of the first management apparatus, the first management apparatus may determine, based on the running status of the first management apparatus, the switching condition corresponding to the running status.

For example, the switching condition corresponding to the active state may include: A first connection probability is less than or equal to a probability threshold; and the switching condition corresponding to the standby state includes: The first connection probability is greater than the probability threshold, and a second connection probability is less than or equal to the probability threshold. The first connection probability is a probability of a connection between the first management apparatus and the at least one reference apparatus managed by the active/standby management system, and the second connection probability is a probability of a connection between the second management apparatus and the at least one reference apparatus. The probability threshold may be any probability value, for example, 90% or 50%.

S206: The first management apparatus determines, based on the newly determined connection status corresponding to the at least one reference apparatus, whether the switching condition corresponding to the running status of the first management apparatus is met. If the switching condition corresponding to the running status of the first management apparatus is met, S207 is performed; or if the switching condition corresponding to the running status of the first management apparatus is not met, S208 is performed.

In one aspect, when the first management apparatus is the active state, the switching condition corresponding to the running status of the first management apparatus includes only that the first connection probability is less than or equal to the probability threshold. Therefore, in S206, the first management apparatus only needs to determine the first connection probability between the first management apparatus and the at least one reference apparatus based on the newly determined connection status between the first management apparatus and the at least one reference apparatus, and then, determines, based on the first connection probability, whether the switching condition corresponding to the running status of the first management apparatus is met. In addition, in S206, the first management apparatus does not need to determine the second connection probability between the second management apparatus and the at least one reference apparatus.

In another aspect, when the running status of the first management apparatus is the standby state, the switching condition corresponding to the running status of the first management apparatus not only includes that the first connection probability is greater than the probability threshold, but also includes that the second connection probability is less than or equal to the probability threshold. Therefore, in S206, the first management apparatus not only needs to determine the first connection probability between the first management apparatus and the at least one reference apparatus based on the newly determined connection status between the first management apparatus and the at least one reference apparatus. The first management apparatus further needs to determine the second connection probability between the second management apparatus and the at least one reference apparatus based on the newly determined connection status between the second management apparatus and the at least one reference apparatus, and then, determines, based on the first connection probability and the second connection probability, whether the switching condition corresponding to the running status of the first management apparatus is met.

For example, when determining the connection probability between any management apparatus and the at least one reference apparatus based on a newly determined connection status between the management apparatus and the at least one reference apparatus, the first management apparatus may determine a proportion of a quantity of reference apparatuses that are in the at least one reference apparatus and whose connection status to the management apparatus is the connected state may be determined as the connection probability. For example, it is assumed that there are 20 reference apparatuses in the at least one reference apparatus; and in the 20 reference apparatuses, connection statuses between 15 reference apparatuses and the management apparatus are connected state, and connection statuses between five reference apparatuses and the management apparatus are disconnected state. In this case, the first management apparatus may determine that the connection probability is 15/20=75%.

S207: The first management apparatus switches the running status.

When the switching condition corresponding to the running status of the first management apparatus is met, it indicates that the current first management apparatus can switch the running status. In this case, if the running status of the first management apparatus is the active state, the first management apparatus may switch the running status from the active state to the standby state; or if the running status of the first management apparatus is the standby state, the first management apparatus may switch the running status from the standby state to the active state.

S208: The first management apparatus keeps the running status unchanged.

When the switching condition corresponding to the running status of the first management apparatus is not met, it indicates that the current first management apparatus cannot switch the running status. In this case, the first management apparatus needs to keep the running status unchanged.

The following uses the communications system shown in FIG. 1 as an example to describe the running status switching method provided in this embodiment of this application.

Each management apparatus in the active/standby management system shown in FIG. 1 may switch a running status by using the method shown in FIG. 2. It is assumed that a running status of the management apparatus 01 is an active state, a running status of the management apparatus 02 is a standby state, the at least one reference apparatus includes the reference apparatus 03 and the reference apparatus 04 in FIG. 1, a probability of a connection between the management apparatus 01 and the at least one reference apparatus is a connection probability A, and a probability of a connection between the management apparatus 02 and the at least one reference apparatus is a connection probability B.

There are the following four cases of relationships between the connection probability A and the probability threshold and between the connection probability B and the probability threshold.
(1) Both the connection probability A and the connection probability B are greater than the probability threshold.
(2) Both the connection probability A and the connection probability B are less than or equal to the probability threshold.
(3) The connection probability A is greater than the probability threshold, and the connection probability B is less than or equal to the probability threshold.
(4) The connection probability A is less than or equal to the probability threshold, and the connection probability B is greater than the probability threshold.

For the management apparatus 01, because the running status of the management apparatus 01 is the active state, the switching condition corresponding to the running status of the management apparatus 01 includes: The first connection probability is less than or equal to the probability threshold. In addition, the first connection probability is the connection probability A, and the second connection probability is the connection probability B. The switching condition corresponding to the running status of the management apparatus 01 is met in both cases (2) and (4), and is met in neither case (1) nor case (3). Therefore, the management apparatus 01 switches the running status from the active state to the standby state in cases (2) and (4), and keeps the active state unchanged in cases (1) and (3).

For the management apparatus 02, because the running status of the management apparatus 02 is the standby state, the switching condition corresponding to the running status of the management apparatus 02 includes: The first connection probability is greater than the probability threshold, and the second connection probability is less than or equal to the probability threshold. In addition, the first connection probability is the connection probability B, and the second connection probability is the connection probability A. The switching condition corresponding to the running status of the management apparatus 02 is met in case (4), and is not met in cases (1), (2), and (3). Therefore, the management apparatus 02 switches the running status from the standby state to the active state in case (4), and keeps the standby state unchanged in cases (1), (2), and (3).

It can be learned that in case (1), the management apparatus 01 keeps the running status in the active state, and the management apparatus 02 keeps the running status in the standby state. In case (2), the management apparatus 01 switches the running status to the standby state, and the management apparatus 02 keeps the running status in the standby state. In case (3), the management apparatus 01 keeps the running status in the active state, and the management apparatus 02 keeps the running status in the standby state. In case (4), the management apparatus 01 switches the running status to the standby state, and the management apparatus 02 switches the running status to the active state. In cases (1), (3), and (4), the active/standby management system includes a management apparatus whose running status is the active state and a management apparatus whose running status is the standby state. In case (2), the active/standby management system does not include a management apparatus whose running status is the active state, and include two management apparatuses whose running statuses are the standby state. In either case, the active/standby management system does not have a plurality of management apparatuses whose running statuses are the active state. This avoids management disorder caused by simultaneous management of the reference apparatus by the plurality of management apparatuses whose running statuses are the active state.

In addition, the running status switching method provided in this embodiment of this application is related to an apparatus inside the network system, and is irrelevant to an apparatus outside the network system (for example, a user apparatus connected to the reference apparatus). Therefore, the running status of the management apparatus can be switched without relying on the apparatus outside the network system.

Further, the following describes the running status switching method provided in this embodiment of this application by using several common scenarios in a running process of the active/standby management system shown in FIG. 1 as examples. It is still assumed that the running status of the management apparatus 01 is the active state, the running status of the management apparatus 02 is the standby state, and the at least one reference apparatus includes the reference apparatus 03 and the reference apparatus 04 in FIG. 1.

Scenario 1: The management apparatus 01 is powered off, or encounters a disaster or a fault. In this case, the management apparatus 02 switches the running status from the standby state to the active state, and manages the reference apparatus 03 and the reference apparatus 04. In this period, the staff member may repair the management apparatus 01, and then the management apparatus 02 may synchronize data to the management apparatus 01.

Scenario 2: The management apparatus 02 is powered off, or encounters a disaster or a fault. In this case, the management apparatus 01 does not switch the running status. The staff member may repair the management apparatus 02, and the management apparatus 02 does not switch the running status after being repaired.

Scenario 3: The management apparatus 01 is disconnected from the management apparatus 02. In this case, the management apparatus 01 may display the prompt information indicating that the management apparatus 01 is disconnected from the management apparatus 02, to prompt the staff member to repair the connection. In this case, the management apparatus 01 and the management apparatus 02 may determine, based on the running status switching method provided in this embodiment of this application, whether the running status needs to be switched.

Scenario 4: The management apparatus 01 is disconnected from a reference apparatus (for example, the reference apparatus 03). In this case, the management apparatus 01 may display prompt information indicating that the management apparatus 01 is disconnected from the reference apparatus 03, the management apparatus 02 may also display the prompt information, and the staff member may repair the connection between the management apparatus 01 and the reference apparatus 03 based on the prompt information. Optionally, if the switching condition corresponding to the current running status of the management apparatus 01 is met, the management apparatus 01 switches the running status. Correspondingly, the management apparatus 02 also switches the running status when the switching condition corresponding to the running status is met.

Scenario 5: The management apparatus 02 is disconnected from a reference apparatus (for example, the reference apparatus 03). In this case, the management apparatus 01 may display prompt information indicating that the management apparatus 02 is disconnected from the reference apparatus 03, the management apparatus 02 may also display the prompt information, and the staff member may repair the connection between the management apparatus 02 and the reference apparatus 03 based on the prompt information. Optionally, if the switching condition corresponding to the current running status of the management apparatus 01 is met, the management apparatus 01 switches the running status. Correspondingly, the management apparatus 02 also switches the running status when the switching condition corresponding to the running status is met.

Scenario 6: The management apparatus 01 is disconnected from the management apparatus 02, and the management apparatus 01 is disconnected from the reference apparatus (for example, the reference apparatus 03). In this case, the management apparatus 01 may display prompt information indicating that the management apparatus 01 is disconnected from the management apparatus 02, to prompt a staff member to repair the connection between the management apparatus 01 and the management apparatus 02. The management apparatus 01 may display prompt information indicating that the management apparatus 01 is disconnected from the reference apparatus 03, the management apparatus 02 may also display the prompt information, and the staff member may repair the connection between the management apparatus 01 and the reference apparatus 03 based on the prompt information. Optionally, if the switching condition corresponding to the current running status of the management apparatus 01 is met, the management apparatus 01 switches the running status. Correspondingly, the management apparatus 02 also switches the running status when the switching condition corresponding to the running status is met.

Scenario 7: The management apparatus 01 is disconnected from the management apparatus 02, and the management apparatus 02 is disconnected from the reference apparatus (for example, the reference apparatus 03). In this case, the management apparatus 01 may display prompt information indicating that the management apparatus 01 is disconnected from the management apparatus 02, to prompt a staff member to repair the connection between the management apparatus 01 and the management apparatus 02. The management apparatus 01 may display prompt information indicating that the management apparatus 01 is disconnected from the reference apparatus 03, the management apparatus 02 may also display the prompt information, and the staff member may repair the connection between the management apparatus 01 and the reference apparatus 03 based on the prompt information. Optionally, if the switching condition corresponding to the current running status of the management apparatus 01 is met, the management apparatus 01 switches the running status. Correspondingly, the management apparatus 02 also switches the running status when the switching condition corresponding to the running status is met.

Scenario 8: The management apparatus 01 is disconnected from the management apparatus 02, the management apparatus 01 is disconnected from a reference apparatus (for example, the reference apparatus 03), and the management apparatus 02 is disconnected from a reference apparatus (for example, the reference apparatus 03). In this case, the management apparatus 01 may display prompt information indicating that the management apparatus 01 is disconnected from the management apparatus 02 and that the management apparatus 01 is disconnected from the reference apparatus 03, to prompt the staff member to repair the connection between the management apparatus 01 and the management apparatus 02 and the connection between the management apparatus 01 and the reference apparatus 03. The management apparatus 02 may display prompt information indicating that the management apparatus 02 is disconnected from the management apparatus 01 and that the management apparatus 02 is disconnected from the reference apparatus 03, to prompt the staff member to repair the connection between the management apparatus 02 and the management apparatus 01 and the connection between the management apparatus 02 and the reference apparatus 03. Optionally, if the switching condition corresponding to the current running status of the management apparatus 01 is met, the management apparatus 01 switches the running status. Correspondingly, the management apparatus 02 also switches the running status when the switching condition corresponding to the running status is met.

It may be understood that, when the running statuses of the management apparatuses in the active/standby management system are all the standby states, the staff member may repair and adjust the active/standby management system, so that the active/standby management system has both the management apparatus whose running status is the active state and the management apparatus whose running status is the standby state. Certainly, when the running statuses of the management apparatuses in the active/standby management system are all the standby states, these management apparatuses may also automatically switch the running statuses by using the method provided in this embodiment of this application, so that the active/standby management system has management apparatuses whose running statuses are the active state and the standby state. This is not limited in this embodiment of this application.

Optionally, a quantity of the at least one reference apparatus in S201 may be greater than a quantity threshold. The quantity threshold may be any value, for example, 10, 15, or 20.

A larger quantity of the at least one reference apparatus indicates higher reliability and higher credibility of the first connection probability and the second connection probability that are determined by the first management apparatus. For example, it is assumed that accuracy that the first management apparatus determines the connection status between the first management apparatus and the reference apparatus is Pa, accuracy that the first management apparatus determines the connection status between the second management apparatus and the reference apparatus is Pb, 0≤Pa≤1, and 0≤Pb≤1. In this case, accuracy that the first management apparatus determines the connection status between the first management apparatus and the reference apparatus and the connection status between the second management apparatus and the reference apparatus is Pa*Pb, and an error rate is 1-Pa*Pb. If the quantity of the at least one reference apparatus is K, and K≥1, an error rate that the first management apparatus determines that the connection status between the first management apparatus and the reference apparatus and the connection status between the second management apparatus and the reference apparatus is (1-Pa*Pb)^K, where accuracy is 1-(1-Pa*Pb)^K, and (1-Pa*Pb)^K indicates (1-Pa*Pb) to the power of K. It can be learned that 1-Pa*Pb is a number less than 1. When K is larger, the error rate (1-Pa*Pb)^K is smaller, the accuracy is higher, reliability of the first connection probability and the second connection probability determined by the first management apparatus is higher, and credibility is higher. For example, when K is greater than 20, the error rate approaches 0, and the accuracy approaches 1.

Optionally, the at least one reference apparatus in S201 may meet at least one of the following conditions: The at least one reference apparatus is located in a plurality of subnets; the at least one reference apparatus is a plurality of reference apparatuses whose distances are greater than a distance threshold (for example, 10 kilometers or 100 kilometers); and/or the at least one reference apparatus is managed by multiple processes in a same management apparatus (for example, a management apparatus whose running status is an active state).

The at least one reference apparatus is located in the plurality of subnets. This can avoid a case in which the at least one reference apparatus that is located in a same subnet and that cannot work normally (for example, these reference apparatuses are all faulty or perform apparatus maintenance simultaneously) when the subnet is faulty affects normal execution of the running status switching method provided in this embodiment of this application.

When the at least one reference apparatus has the plurality of reference apparatuses whose distances are greater than the distance threshold, it may be considered that the plurality of reference apparatuses are distributed in different regions. This can avoid a case in which the at least one reference apparatus that is distributed in a same region and that cannot work normally (for example, these reference apparatuses are all faulty or perform apparatus maintenance simultaneously) when a geological disaster occurs in the region affects normal execution of the running status switching method provided in this embodiment of this application.

The at least one reference apparatus is managed by the multiple processes. This can avoid a case in which the at least one reference apparatus that is managed by a same process and that cannot work normally (for example, these reference apparatuses are all faulty or perform apparatus maintenance simultaneously) when the process is faulty affects normal execution of the running status switching method provided in this embodiment of this application.

It can be learned from the foregoing analysis that, in the running status switching method provided in this embodiment of this application, the management apparatus switches the running status based on the connection status of the at least one reference apparatus. In addition, a probability that the at least one reference apparatus cannot work normally is relatively low. Therefore, the running status switching method has relatively high reliability and relatively high credibility. However, in a solution in which the management apparatus switches the running status by using the third-party apparatus, a probability that the third-party apparatus cannot work normally is relatively high. As a result, the solution in which the management apparatus switches the running status by using the third-party apparatus has relatively low reliability.

In S201, for any management apparatus in the active/standby management system and any reference apparatus in the at least one reference apparatus, the first management apparatus may determine the connection status between the management apparatus and the reference apparatus in at least one of a plurality of implementations. The following describes the plurality of implementations by using examples.
1. In a first possible implementation, for any management apparatus in the active/standby management system and any reference apparatus in the at least one reference apparatus, the first management apparatus may determine, based on connection information of the reference apparatus, at least one target apparatus connected to the reference apparatus within target duration (for example, 10 seconds or 5 milliseconds) before a current moment. When the at least one target apparatus includes the management apparatus, the first management apparatus may determine that a connection status between the management apparatus and the reference apparatus is a connected state; or when the at least one target apparatus does not include the management apparatus, the first management apparatus may determine that the connection status between the management apparatus and the reference apparatus is a disconnected state. The "connection" herein may be a long connection or a short connection. When the connection is the short connection, the management apparatus needs to periodically establish a connection to the reference apparatus.

The reference apparatus maintains the connection information of the reference apparatus. The connection information includes at least an identifier of the target apparatus connected to the reference apparatus. The identifier of the target apparatus may be an IP address, an identity document (identity document, ID), or the like. The target apparatus has an external IP address and an internal IP address, and the IP address may be the external IP address of the target apparatus. For example, in the connection information of the reference apparatus, the identifier of the target apparatus connected to the reference apparatus may be a PEER-IP (peer internet protocol address). For example, connection information of a reference apparatus includes two PEER-IPs of 129.9.35.220 and 129.9.35.221, which indicates that the reference apparatus is connected to a target apparatus whose PEER-IP is 129.9.35.220, and the reference apparatus is also connected to another target apparatus whose PEER-IP is 129.9.35.221. The connection information may further include other content, for example, CON-TIMES (connection duration). This is not limited in this embodiment of this application.

When determining the connection status between the reference apparatus and the management apparatus, the first management apparatus may send an obtaining instruction of the connection information to the reference apparatus, so that the reference apparatus sends the connection information of the reference apparatus to the first management apparatus according to the obtaining instruction. Then, the first management apparatus may determine the target apparatus based on the identifier of the target apparatus in the connection information.

2. In a second possible implementation, each management apparatus of the at least one management apparatus is configured to periodically (for example, a period of 10 seconds or 20 seconds) perform a target operation on each reference apparatus of the at least one reference apparatus. For any management apparatus in the active/standby management system and any reference apparatus in the at least one reference apparatus, the first management apparatus may determine an execution result (including at least one execution result in total) of at least one latest target operation performed by the management apparatus on the reference apparatus. When a quantity of successful execution results in the at least one execution result is greater than a quantity threshold, the first management apparatus may determine that a connection status between the management apparatus and the reference apparatus is a connected state; or when the quantity of successful execution results in the at least one execution result is less than or equal to the quantity threshold, the first management apparatus may determine that the connection status between the management apparatus and the reference apparatus is a disconnected state.

The target operation may be any operation, for example, writing data, modifying data, deleting data, and establishing a connection.
(1) When the target operation is writing the data, the management apparatus may periodically write data into a specific storage space in the reference apparatus, and storage spaces in which different management apparatuses write data into a same reference apparatus are different from each other. Optionally, data written each time may include a timestamp of the written data. The first management apparatus may read the data written into the storage space in the reference apparatus, and determine the execution result of the at least one latest target operation based on the data.

For example, it is assumed that in a process of periodically writing data into a storage space in the reference apparatus 03, the management apparatus 01 should sequentially write a timestamp 1, a timestamp 2, a timestamp 3, a timestamp 4, and a timestamp 5 into the storage space, but actually, the management apparatus 01 sequentially writes a timestamp 1, a timestamp 2, a timestamp 3, and a timestamp 5 into the storage space. If the at least one target operation includes two target operations, when determining execution results of the latest two target operations, the first management apparatus may first calculate that data that should be written in the latest two target operations is respectively the timestamp 4 and the timestamp 5. Then, the first management apparatus may compare the timestamp "the timestamp 5" that is written into the storage space in the last first time with the timestamp "the timestamp 5" that should be written in the last first time, to determine that an execution result of the last first target operation is execution success. The first management apparatus may further compare the timestamp "the timestamp 3" that is written into the storage space in the last second time with the timestamp "timestamp 4" that should be written in the last second time, to determine that an execution result of the last second target operation is execution failure.

Optionally, in the timestamp solution in this application, times of apparatuses in the network system are consistent, and timestamps generated by different apparatuses at a same time are the same.

Optionally, the data written by the management apparatus into the reference apparatus each time may not include the foregoing timestamp, but may include other content such as a quantity of times that the data is written. It may be understood that the data written by the management apparatus into the storage space in the reference apparatus may be the data in the foregoing example, or certainly may be configuration data. The reference apparatus is configured to perform a corresponding configuration operation based on the configuration data. This is not limited in this embodiment of this application.

Alternatively, to avoid a case in which the data cannot be effectively written due to the insufficient storage space in the reference apparatus for the management apparatus to write the data, the management apparatus may further periodically delete historical data written into the storage space. For example, each time writing data into the storage space for 100 times, the management apparatus deletes the data written into the storage space for the first 50 times.

In the foregoing example, the first management apparatus determines whether the data that should be written by the management apparatus exists in the storage space, to determine whether the data write operation is successful. Optionally, the reference apparatus may further maintain an operation log. The operation log is at least used to record an operation of another apparatus (for example, the management apparatus) on the reference apparatus. The first management apparatus may determine, based on the operation log in the reference apparatus, whether the management apparatus successfully performs the target operation on the reference apparatus. In this case, the data written by the management apparatus into the reference apparatus may include a timestamp, or may not include a timestamp.

(2) When the target operation is modifying the data, data to be modified by the management apparatus may be pre-stored in a specific storage space in the reference apparatus, and storage spaces of data to be modified by different management apparatuses in a same reference apparatus are different from each other. For the to-be-modified data, refer to the data written by the management apparatus into the reference apparatus in the first aspect. Details are not described herein in this embodiment of this application. The management apparatus may periodically modify the to-be-modified data pre-stored in the reference apparatus. The first management apparatus may determine the execution result of the at least one last target operation based on whether the storage space in the reference apparatus includes data that should be modified.

For example, it is assumed that the to-be-modified data pre-stored in the storage space in the reference apparatus includes data 1, data 2, data 3, data 4, and data 5, where the data 1 should be modified to a timestamp 1, the data 2 should be modified to a timestamp 2, the data 3 should be modified to a timestamp 3, the data 4 should be modified to a timestamp 4, and the data 5 should be modified to a timestamp 5. Actually, in a process of periodically modifying the data in the specific storage space in the reference apparatus 03, the management apparatus 01 sequentially modifies the data 1 to the timestamp 1, modifies the data 2 to the timestamp 2, modifies the data 3 to the timestamp 3, and modifies the data 5 to the timestamp 5. If the at least one target operation includes two target operations, when determining execution results of the last two target operations, the first management apparatus may first calculate that the data 4 should be modified to the timestamp 4 and the data 5 should be modified to the timestamp 5 in the last two target operations. Then, the first management apparatus may compare the timestamp "the timestamp 5" that is obtained after modification in the storage space in the last first time with the timestamp "the timestamp 5" that should be obtained through modification in the last first time, to determine that an execution result of the last first target operation is execution success. The first management apparatus may further compare the timestamp "the timestamp 3" that is obtained after modification in the storage space in the last second time with the timestamp "timestamp 4" that should be obtained through modification in the last second time, to determine that an execution result of the last second target operation is execution failure.

Alternatively, to avoid a case in which the to-be-modified data pre-stored in the reference apparatus is totally modified, the management apparatus may further periodically update the to-be-modified data in the storage space. For example, each time the management apparatus modifies the data in the storage space for 100 times, the management apparatus updates the data modified in the first 50 times.

In the foregoing example, the first management apparatus determines whether the data that should be obtained through modification by the management apparatus exists in the storage space, to determine whether the data modification operation is successful. Optionally, the reference apparatus may further maintain an operation log. The operation log is at least used to record an operation of another apparatus (for example, the management apparatus) on the reference apparatus. The first management apparatus may determine, based on the operation log in the reference apparatus, whether the management apparatus successfully performs the target operation on the reference apparatus.

(3) When the target operation is deleting the data, data to be deleted by the management apparatus may be pre-stored in a specific storage space in the reference apparatus, and storage spaces of data to be deleted by different management apparatuses in a same reference apparatus are different from each other. For the to-be-deleted data, refer to the data written by the management apparatus into the reference apparatus in the first aspect. Details are not described herein in this embodiment of this application. The management apparatus may periodically delete the to-be-deleted data pre-stored in the reference apparatus. The first management apparatus may determine the execution result of the at least one last target operation based on whether the data in the storage space in the reference apparatus is deleted.

For example, it is assumed that the to-be-deleted data pre-stored in the storage space in the reference apparatus includes a timestamp 1, a timestamp 2, a timestamp 3, a timestamp 4, and a timestamp 5. In a process in which the management apparatus 01 periodically deletes the data in the storage space in the reference apparatus 03, the timestamp 1, the timestamp 2, the timestamp 3, the timestamp 4, and the timestamp 5 should be deleted in sequence. Actually, the management apparatus 01 deletes the timestamp 1, the timestamp 2, the timestamp 3, and the timestamp 5 in the storage space in sequence. If the at least one target operation includes two target operations, when determining execution results of the latest two target operations, the first management apparatus may first calculate that data that should be deleted in the latest two target operations is respectively the timestamp 4 and the timestamp 5. Then, the first management apparatus may compare the timestamp "the timestamp 5" that is deleted in the storage space in the last first time with the timestamp "the timestamp 5" that should be deleted in the last first time, to determine that an execution result of the last first target operation is execution success. The first management apparatus may further compare the timestamp "the timestamp 3" that is deleted in the storage space in the last second time with the timestamp "timestamp 4" that should be deleted in the last second time, to determine that an execution result of the last second target operation is execution failure.

Alternatively, to avoid a case in which the to-be-deleted data pre-stored in the reference apparatus is totally deleted or the data cannot be effectively deleted, the management apparatus may further periodically store the to-be-deleted data in the storage space. For example, each time the management apparatus deletes the data in the storage space for 50 times, and stores some newly added to-be-deleted data in the storage space.

In the foregoing example, the first management apparatus determines whether the data that should be deleted by the management apparatus exists in the storage space, to determine whether the data deletion operation is successful. Optionally, the reference apparatus may further maintain an operation log. The operation log is at least used to record an operation of another apparatus (for example, the management apparatus) on the reference apparatus. The first management apparatus may determine, based on the operation log in the reference apparatus, whether the management apparatus successfully performs the target operation on the reference apparatus.

(4) When the target operation is establishing the connection, the management apparatus may periodically establish the connection to the reference apparatus. That the management apparatus establishes the connection to the reference apparatus may also be referred to as that the management apparatus logs in to the reference apparatus. In this embodiment of this application, the connection established between the management apparatus and the reference apparatus may be a persistent connection or a non-persistent connection. This is not limited in this embodiment of this application. The reference apparatus may further maintain an operation log. The operation log is at least used to record an operation of another apparatus (for example, the management apparatus) on the reference apparatus. The first management apparatus may determine, based on the operation log in the reference apparatus, whether the connection between the management apparatus and the reference apparatus is successfully established, and further determine the execution result of the at least one last target operation.

It may be understood that in S201, the first management apparatus may alternatively determine the connection status between the management apparatus and the reference apparatus in another manner. This is not limited in this application.

In S206 of the foregoing embodiment, the first management apparatus may determine, based on the connection status corresponding to the at least one reference apparatus, whether the switching condition corresponding to the running status of the first management apparatus is met. If the switching condition corresponding to the running status of the first management apparatus is met, the first management apparatus may switch between the active state and the standby state for the first management apparatus in S207. The running status of the first management apparatus includes the active state or the standby state, and the switching condition corresponding to the active state is different from the switching condition corresponding to the standby state. In the foregoing embodiment, an example in which the switching condition corresponding to the active state includes: The first connection probability is less than or equal to the probability threshold; and the switching condition corresponding to the standby state includes: The first connection probability is greater than the probability threshold, and the second connection probability is less than or equal to the probability threshold is used.

Optionally, these switching conditions are not limited thereto. Descriptions are provided below by using other several cases of these switching conditions as examples.

Case (1): The switching condition corresponding to the active state includes: The first management apparatus is disconnected from the second management apparatus, and the first connection probability is less than or equal to the probability threshold; and the switching condition corresponding to the standby state includes: The first management apparatus is disconnected from the second management apparatus, the first connection probability is greater than the probability threshold, and the identifier of the management apparatus in the active state is not set in the at least one reference apparatus within the duration threshold before the current moment. The management apparatus in the active state in the active/standby management system is configured to periodically set the identifier of the management apparatus in the active state in the at least one reference apparatus. The duration threshold is greater than or equal to a period in which the management apparatus in the active state sets the identifier of the management apparatus in the active state in the at least one reference apparatus.

When the running status of the first management apparatus is the active state, if the first management apparatus is not disconnected from the second management apparatus, the first management apparatus may still maintain the active state. In addition, when the first management apparatus runs in the active state, the first management apparatus needs to periodically set, in the at least one reference apparatus (for example, at least some reference apparatuses in the at least one reference apparatus), the identifier of the first management apparatus as the identifier of the management apparatus in the active state.

When the running status of the first management apparatus is the active state, if the first management apparatus is disconnected from the second management apparatus, the first management apparatus may determine whether the first connection probability is less than or equal to the probability threshold. If the first connection probability is less than or equal to the probability threshold, the first management apparatus may determine that the switching condition corresponding to the running status of the first management apparatus is met. In this case, the first management apparatus may switch from the active state to the standby state, and after switching to the standby state, the first management apparatus does not continue to set the identifier of the first management apparatus in the at least one reference apparatus. If the first connection probability is greater than the probability threshold, the first management apparatus may determine that the switching condition corresponding to the running status of the first management apparatus is not met. In this case, the first management apparatus may still maintain the active state, and continue to periodically set, in the at least one reference apparatus, the identifier of the first management apparatus as the identifier of the management apparatus in the active state.

When the running status of the first management apparatus is the standby state, if the first management apparatus is not disconnected from the second management apparatus, the first management apparatus may still maintain the standby state. In addition, when the first management apparatus runs in the standby state, the first management apparatus does not need to periodically set, in the at least one reference apparatus, the identifier of the management apparatus in the active state.

When the running status of the first management apparatus is the standby state, if the first management apparatus is disconnected from the second management apparatus, the first management apparatus may determine whether the first connection probability is less than or equal to the probability threshold, and whether the identifier of the management apparatus in the active state is set in the at least one reference apparatus within the duration threshold before the current moment. If the first connection probability is greater than the probability threshold, and the identifier of the management apparatus in the active state is not set in the at least one reference apparatus within the duration threshold before the current moment, the first management apparatus may determine that the switching condition corresponding to the running status of the first management apparatus is met. In this case, the first management apparatus may switch from the standby state to the active state, and after switching to the active state, the first management apparatus needs to periodically set the identifier of the first management apparatus in the at least one reference apparatus. If the first connection probability is less than or equal to the probability threshold, the identifier of the management apparatus in the active state is set in the at least one reference apparatus within the duration threshold before the current moment, and at least one of the two conditions is met, the first management apparatus may determine that the switching condition corresponding to the running status of the first management apparatus is not met. In this case, the first management apparatus may still maintain the standby state, and the first management apparatus does not need to periodically set the identifier of the management apparatus in the active state in the at least one reference apparatus.

Optionally, the first management apparatus may periodically set the identifier of the first management apparatus in the at least one reference apparatus in a plurality of manners. For example, the first management apparatus writes the identifier of the first management apparatus and a current timestamp into the at least one reference apparatus each time, so as to set the identifier of the first management apparatus in the at least one reference apparatus. For another example, when setting the identifier of the first management apparatus in the at least one reference apparatus for the first time, the first management apparatus may write, in the at least one reference apparatus, the identifier of the first management apparatus and the timestamp at which information is currently written into. Then, each time the first management apparatus sets the identifier of the first management apparatus in the at least one reference apparatus, the first management apparatus may update the previously written timestamp to the current timestamp.

Case (2): For the switching condition corresponding to the standby state, refer to the switching condition corresponding to the standby state in Case (1). Details are not described herein in this embodiment of this application. The switching condition corresponding to the active state includes: The first management apparatus is disconnected from the second management apparatus, and the first connection probability is less than or equal to the probability threshold; or the first management apparatus is disconnected from the second management apparatus, the first connection probability is greater than the probability threshold, the identifier of the management apparatus in the active state is set in the at least one reference apparatus within the duration threshold before the current moment, and the identifier of the management apparatus in the active state is different from the identifier of the first management apparatus.

When the running status of the first management apparatus is the active state, if the first management apparatus is not disconnected from the second management apparatus, the first management apparatus may maintain the active state. In addition, when the first management apparatus runs in the active state, the first management apparatus needs to periodically set, in the at least one reference apparatus, the identifier of the first management apparatus as the identifier of the management apparatus in the active state.

When the running status of the first management apparatus is the active state, if the first management apparatus is disconnected from the second management apparatus, the first management apparatus may determine whether the first connection probability is less than or equal to the probability threshold, whether the identifier of the management apparatus in the active state is set in the at least one reference apparatus within the duration threshold before the current moment, and whether the identifier is the same as the identifier of the first management apparatus when the identifier is set in at least one reference apparatus within the duration threshold before the current moment. If the first connection probability is greater than the probability threshold, and the identifier of the management apparatus in the active state is not set in the at least one reference apparatus within the duration threshold before the current moment, the first management apparatus may determine that the switching condition corresponding to the running status of the first management apparatus is not met. If the first connection probability is greater than the probability threshold, the identifier of the management apparatus in the active state is set in the at least one reference apparatus within the duration threshold before the current moment, and the identifier is the same as the identifier of the first management apparatus, the first management apparatus may determine that the switching condition corresponding to the running status of the first management apparatus is not met. When determining that the switching condition corresponding to the running status of the first management apparatus is not met, the first management apparatus may still maintain the active state, and continue to periodically set, in the at least one reference apparatus, the identifier of the first management apparatus as the identifier of the management apparatus in the active state.

If the first connection probability is less than or equal to the probability threshold, the first management apparatus may determine that the switching condition corresponding to the running status of the first management apparatus is met. If the first connection probability is greater than the probability threshold, the identifier of the management apparatus in the active state is set in the at least one reference apparatus within the duration threshold before the current moment, and the identifier is different from the identifier of the first management apparatus, the first management apparatus may also determine that the switching condition corresponding to the running status of the first management apparatus is met. When determining that the switching condition corresponding to the running status of the first management apparatus is met, the first management apparatus may switch from the active state to the standby state, and the first management apparatus does not continue to set the identifier of the first management apparatus in the at least one reference apparatus.

Optionally, in a process of switching between the active state and the standby state for the first management apparatus based on the connection status corresponding to the at least one reference apparatus, the first management apparatus may not need to determine whether the switching condition is met. For example, both the at least one management apparatus and the at least one reference apparatus have priorities, different apparatuses have different priorities, and a priority of the management apparatus is higher than a priority of the reference apparatus. In addition, the management apparatus in the active state is configured to periodically set the identifier of the management apparatus in the active state in the at least one reference apparatus and the at least one management apparatus. The at least one management apparatus and the at least one reference apparatus are connected to each other, and each of the at least one management apparatus and the at least one reference apparatus can determine priorities of these apparatuses.

For each of the at least one management apparatus and the at least one reference apparatus, if no identifier of the management apparatus in the active state is set in the apparatuses within the duration threshold before the current moment, and the apparatus is connected to more than half of other apparatuses of these apparatuses, the apparatus may set, in the at least one management apparatus and the at least one reference apparatus, an identifier of an apparatus, with the highest priority, connected to the apparatus as the identifier of the management apparatus in the active state. Then, the apparatus with the highest priority may switch the running status to the active state, and periodically set the identifier of the management apparatus in the active state in the at least one management apparatus and the at least one reference apparatus.

There are various manners in which the first management apparatus switches between the active state and the standby state for the first management apparatus based on the connection status corresponding to the at least one reference apparatus. The foregoing manners are used as examples in this embodiment of this application. This is not limited in this embodiment of this application.

The foregoing describes how the management apparatus in the active/standby management system switches the running status by using the reference apparatus in the running process. Optionally, when being started, the management apparatus can also determine, based on the connection status corresponding to the at least one reference apparatus, whether the management apparatus is started in the active state or the standby state.

The first management apparatus is used as an example. When being started, the first management apparatus needs to first determine whether the first management apparatus is disconnected from the second management apparatus. If the first management apparatus is disconnected from the second management apparatus, the first management apparatus needs to determine whether an active-state startup condition and a standby-state startup condition are met. When the active-state startup condition is met, the first management apparatus may be started in the active state. When the standby-state startup condition is met, the first management apparatus may be started in the standby state. The active-state startup condition includes: the first connection probability is greater than the probability threshold, and the second connection probability is less than or equal to the probability threshold. The standby-state startup condition includes: both the first connection probability and the second connection probability are greater than the probability threshold; or both the first connection probability and the second connection probability are less than or equal to the probability threshold; or the first connection probability is less than or equal to the probability threshold, and the second connection probability is greater than the probability threshold.

It may be further understood that the management apparatus usually includes a module at a management plane and a module at a service plane. The module at the management plane is configured to manage the module at the service plane, the module at the service plane may run in an active state or a standby state, and the module at the service plane is configured to execute a service that needs to be executed by the management apparatus (for example, manage the reference apparatus when running in the active state). When being started, the management apparatus usually first starts the module at the management plane, and then starts the module at the service plane. The foregoing processes of determining whether the connection between the first management apparatus and the second management apparatus is interrupted and determining whether the active-state startup condition and the standby-state startup condition are met may be performed by the module at the management plane. When the active-state startup condition is met, the module at the management plane may control the module at the service plane to start in the active state. When the standby-state startup condition is met, the module at the management plane may control the module at the service plane to start in the standby state.

Optionally, when the standby-state startup condition is met, the first management apparatus is started in the standby state. If the condition met in the standby-state startup condition is that both the first connection probability and the second connection probability are greater than the probability threshold, after the first management apparatus is started in the standby state, the first management apparatus may further appropriately adjust the running status. For example, the first management apparatus may record the running status of the first management apparatus. After being started in the standby state, the first management apparatus may further determine whether a running status of the first management apparatus before the current startup is the same as the current standby state. If the running status of the first management apparatus before the current startup is different from the current standby state (for example, the running status of the first management apparatus before this startup is the active state), the first management apparatus may switch the first management apparatus from the standby state to the active state. If the running status of the first management apparatus before the current startup is the same as the current standby state (for example, the running status of the first management apparatus before this startup is the standby state), the first management apparatus may keep the first management apparatus in the standby state.

The foregoing describes a case in which the first management apparatus is disconnected from the second management apparatus when the first management apparatus is started. When the first management apparatus is started, if the first management apparatus is not disconnected from the second management apparatus, the first management apparatus may determine a running status of the second management apparatus by using the connection, and determine, based on the running status of the second management apparatus, the running status of the first management apparatus when the first management apparatus is started. For example, if the running status of the second management apparatus is the standby state (or the running status is switched from the active state to the standby state), the first management apparatus is started in the active state, or the first management apparatus may be started in the running status before the current startup (for example, if the running status of the first management apparatus before the current startup is the standby state, the first management apparatus is started in the standby state). If the running status of the second management apparatus is the active state (or the running status is switched from the standby state to the active state), or the first management apparatus does not find the running status of the second management apparatus, the first management apparatus is started in the standby state.

Optionally, in S206, when the first management apparatus determines, based on the connection status corresponding to the at least one reference apparatus, whether the switching condition corresponding to the running status of the first management apparatus is met, and the switching condition is the foregoing Case (1) or Case (2), the first management apparatus may also determine, in another manner, whether the management apparatus is started in the active state or the standby state. For example, each management apparatus in the active/standby management system has a different priority. The first management apparatus may detect whether the first management apparatus is connected to the at least one reference apparatus, and whether the identifier of the apparatus in the active state is set in the at least one reference apparatus within the time threshold before the current moment, and whether the first management apparatus is the management apparatus with the highest priority in the primary/secondary management system. If the first management apparatus is connected to the at least one reference apparatus, no identifier of the apparatus in the active state is set in the at least one reference apparatus within the time threshold before the current moment, and the first management apparatus is the management apparatus with the highest priority in the active/standby management systems, the first management apparatus may be started in the active state. If the first management apparatus is connected to the at least one reference apparatus, no identifier of the apparatus in the active state is set in the at least one reference apparatus within the time threshold before the current moment, and the first management apparatus is the management apparatus with the highest priority in the active/standby management system, that is, at least one of the three conditions is not met, the first management apparatus is started in the standby state.

In conclusion, in the running status switching method provided in this embodiment of this application, each management apparatus in the active/standby management system can switch the running status according to the method provided in this application. In addition, a basis for switching the running status of the management apparatus is related to the at least one reference apparatus managed by the active/standby management system. The management apparatus can switch the running status without relying on a third-party apparatus outside the network system. This improves flexibility.

In addition, the third-party apparatus does not need to be deployed because the third-party apparatus does not need to be used, this avoids a problem of costs increase caused by deploying the third-party apparatus and a problem of complexity of deploying the third-party apparatus.

A sequence of the operations of the method embodiment provided in this embodiment of this application can be appropriately adjusted, and the operations can also be correspondingly added or deleted based on a situation. For example, the embodiment shown in FIG. 2 may not include S201 and S202, and in S206, the first management apparatus determines, based on the switching condition that needs to be determined, the connection status between the management apparatus and the at least one reference apparatus correspondingly. For another example, the embodiment shown in FIG. 2 may not include S203, that is, a prerequisite for performing S204 by the first management apparatus does not include that the first management apparatus is disconnected from the second management apparatus. Any variation method readily figured out by a person skilled in the art within the technical scope disclosed in this application shall fall within the protection scope of this application. Therefore, details are not described.

The foregoing describes the running status switching method provided in embodiments of this application. The following describes a first management apparatus provided in embodiments of this application.

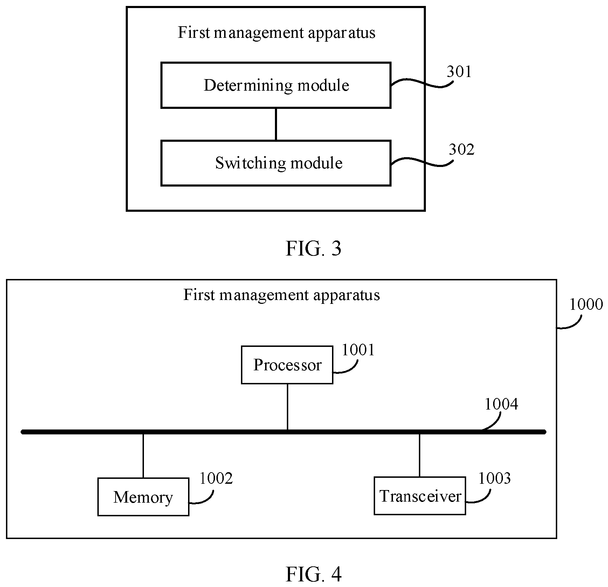

FIG. 3 is a schematic diagram of a structure of a first management apparatus according to an embodiment of this application. The first management apparatus may be applied to the network system provided in this application, and may be configured to implement the running status switching method provided in the foregoing embodiment. As shown in FIG. 3, the first management apparatus may include:
a determining module 301, configured to determine a connection status corresponding to at least one reference apparatus managed by the active/standby management system, where the connection status corresponding to the reference apparatus includes a connection status between the reference apparatus and at least one management apparatus in the active/standby management system, and the at least one management apparatus includes the first management apparatus; and
a switching module 302, configured to switch between an active state and a standby state for the first management apparatus based on the connection status corresponding to the at least one reference apparatus.

The determining module 301 may be configured to perform the operation in S201 in the running status switching method shown in FIG. 2. The switching module 302 may be configured to perform the operations in S203 to S208 in the running status switching method shown in FIG. 2.

Optionally, the at least one reference apparatus meets at least one of the following conditions: the at least one reference apparatus includes apparatuses in a plurality of subnets; the at least one reference apparatus includes a plurality of apparatuses whose distances are greater than a distance threshold; and/or the at least one reference apparatus is managed by multiple processes of a same management apparatus in the active/standby management system.

In one aspect, the determining module 301 may be configured to: determine, based on connection information of any reference apparatus in the at least one reference apparatus, at least one target apparatus connected to the any reference apparatus in target duration before a current moment; and when the at least one target apparatus includes any management apparatus in the at least one management apparatus, determine that a connection status between the any management apparatus and the any reference apparatus is a connected state; or when the at least one target apparatus does not include the any management apparatus, determine that the connection status between the any management apparatus and the any reference apparatus is a disconnected state.

In another aspect, each management apparatus of the at least one management apparatus is configured to periodically perform a target operation on each of the at least one reference apparatus, and the determining module 301 may be configured to: determine, for any management apparatus in the at least one management apparatus and any reference apparatus in the at least one reference apparatus, at least one execution result of the at least one latest target operation performed by the any management apparatus on the any reference apparatus; and when a quantity of successful execution results in the at least one execution result is greater than a quantity threshold, determine that a connection status between the any one management apparatus and the any one reference apparatus is a connected state; or when the quantity of successful execution results in the at least one execution result is less than or equal to the quantity threshold, determine that the connection status between the any one management apparatus and the any one reference apparatus is a disconnected state.

Optionally, the target operation includes at least one of writing data, deleting data, modifying data, and establishing a connection.

Optionally, the switching module 302 is configured to: determine, based on the connection status corresponding to the at least one reference apparatus, whether a switching condition corresponding to the running status of the first management apparatus is met, where the running status of the first management apparatus includes the active state or the standby state, and a switching condition corresponding to the active state is different from a switching condition corresponding to the standby state; and when the switching condition corresponding to the running status of the first management apparatus is met, switch between the active state and the standby state for the first management apparatus.

In one aspect, the at least one management apparatus further includes a second management apparatus; the switching condition corresponding to the active state includes: a first connection probability is less than or equal to a probability threshold; and the switching condition corresponding to the standby state includes: the first connection probability is greater than the probability threshold, and a second connection probability is less than or equal to the probability threshold, where the first connection probability is a probability of a connection between the first management apparatus and the at least one reference apparatus, and the second connection probability is a probability of a connection between the second management apparatus and the at least one reference apparatus.

In another aspect, a management apparatus in the active state in the active/standby management system is configured to periodically set an identifier of the management apparatus in the active state in the at least one reference apparatus, and the at least one management apparatus further includes a second management apparatus; and the switching condition corresponding to the active state includes: the first management apparatus is disconnected from the second management apparatus, and a first connection probability is less than or equal to a probability threshold; or the first management apparatus is disconnected from the second management apparatus, and the first connection probability is greater than the probability threshold, the identifier of the management apparatus in the active state is set in the at least one reference apparatus within a duration threshold before the current moment, and the identifier of the management apparatus in the active state is different from an identifier of the first management apparatus; and the switching condition corresponding to the standby state includes: the first management apparatus is disconnected from the second management apparatus, the first connection probability is greater than the probability threshold, and the identifier of the management apparatus in the active state is not set in the at least one reference apparatus within the duration threshold before the current moment, where the first connection probability is a probability of a connection between the first management apparatus and the at least one reference apparatus, and the duration threshold is greater than or equal to a period in which the management apparatus in the active state sets the identifier in the at least one reference apparatus.

Optionally, the plurality of management apparatuses further includes the second management apparatus, and the switching module 302 is configured to: when the first management apparatus is disconnected from the second management apparatus, switch between the active state and the standby state for the first management apparatus based on the connection status corresponding to the at least one reference apparatus.

Optionally, the determining module 301 is configured to periodically determine the connection status corresponding to the at least one reference apparatus. The switching module 302 is configured to switch between the active state and the standby state for the first management apparatus based on the newly determined connection status corresponding to the at least one reference apparatus.

Optionally, the first management apparatus further includes a prompt module (not shown in FIG. 3), configured to display prompt information of the disconnected state when the connection status corresponding to the at least one reference apparatus includes the disconnected state. The prompt module may be configured to perform the operation in S202 in the running status switching method shown in FIG. 2.

Optionally, the first management apparatus further includes a starting module (not shown in FIG. 3), configured to start, based on the connection status corresponding to the at least one reference apparatus, in the active state or the standby state.

Optionally, the at least one management apparatus further includes the second management apparatus, and the starting module is configured to: when the first management apparatus is disconnected from the second management apparatus and an active-state startup condition is met, start in the active state; or when the first management apparatus is disconnected from the second management apparatus and a standby-state startup condition is met, start in the standby state, where the active-state startup condition includes: the first connection probability is greater than the probability threshold, and the second connection probability is less than or equal to the probability threshold, where the first connection probability is a probability of a connection between the first management apparatus and the at least one reference apparatus, and the second connection probability is a probability of a connection between the second management apparatus and the at least one reference apparatus; and the standby-state startup condition includes: both the first connection probability and the second connection probability are greater than the probability threshold; or both the first connection probability and the second connection probability are less than or equal to the probability threshold; or the first connection probability is less than or equal to the probability threshold, and the second connection probability is greater than the probability threshold.

It may be understood that the management apparatus usually includes a module at a management plane and a module at a service plane. The module at the management plane is configured to manage the module at the service plane, the module at the service plane may run in an active state or a standby state, and the module at the service plane is configured to execute a service that needs to be executed by the management apparatus. The module at the management plane is configured to determine whether the module at the service plane is started in the active state or the standby state, and whether to switch the running status. The modules in the first management apparatus provided in this embodiment of this application may be the modules at the management plane in the management apparatus.

The foregoing describes the first management apparatus in embodiments of this application, and the following describes a possible product form of the first management apparatus. It should be understood that any product in any form that has a feature of the first management apparatus in FIG. 3 falls within the protection scope of this application. It should be further understood that the following description is merely an example, and the product form of the first management apparatus in embodiments of this application is not limited.

In a possible product form, the first management apparatus provided in embodiments of this application may be implemented by using a general bus architecture.

As shown in FIG. 4, an embodiment of this application provides a first management apparatus. The first management apparatus 1000 includes a processor 1001 and a memory 1002. The memory 1002 stores at least one instruction. The processor 1001 is configured to load the instruction to perform the foregoing running status switching method.

Optionally, the first management apparatus may further include a transceiver 1003 and a bus 1004. The processor 1001, the memory 1002, and the transceiver 1003 may be connected through the bus 1004.

The processor 1001 may be a general-purpose central processing unit (central processing unit, CPU), an application-specific integrated circuit (application-specific integrated circuit, ASIC), or one or more integrated circuits configured to control program execution of the solutions in this application.

The memory 1002 may be a read-only memory (read-only memory, ROM), another type of static storage device that can store static information and an instruction, a random access memory (random access memory, RAM), or another type of dynamic storage device that can store information and an instruction, or may be an electrically erasable programmable read-only memory (electrically erasable programmable read-only memory, EEPROM), a compact disc read-only memory (compact disc read-only Memory, CD-ROM) or another compact disc storage, an optical disc storage (including a compact optical disc, a laser disc, an optical disc, a digital versatile disc, a Blu-ray disc, or the like), a magnetic disk storage medium or another magnetic storage device, or any other medium that can be used to carry or store expected program code in a form of an instruction or a data structure and that can be accessed by a computer. However, the memory is not limited thereto.

An embodiment of this application provides another computer-readable storage medium. The storage medium stores at least one instruction, and the instruction is loaded and executed by a processor to perform any running status switching method provided in embodiments of this application.

An embodiment of this application provides a computer program product including an instruction. When the computer program product runs on a first management apparatus, the first management apparatus is enabled to perform any running status switching method provided in embodiments of this application.

All or some of the foregoing embodiments may be implemented by using software, hardware, firmware, or any combination thereof. When the software is used to implement embodiments, all or some of embodiments may be implemented in a form of a computer program product. The computer program product includes one or more computer instructions. When the computer program instructions are loaded and executed on a computer, all or some of the procedures or functions according to embodiments of this application are generated. The computer may be a general-purpose computer, a computer network, or another programmable device. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line) or wireless (for example, infrared, radio, or microwave) manner. The computer-readable storage medium may be any usable medium accessible by a computer, or a data storage device, such as a server or a data center, integrating one or more usable media. The usable medium may be a magnetic medium (for example, a floppy disk, a hard disk, or a magnetic tape), an optical medium, a semiconductor medium (for example, a solid-state drive), or the like.

## Claims

1. A running status switching method, applied to a first management apparatus, wherein the method comprises:
determining (S201) a connection status corresponding to at least one reference apparatus managed by an active/standby management system, wherein the connection status corresponding to the reference apparatus comprises a connection status between the reference apparatus and at least one management apparatus in the active/standby management system, and the at least one management apparatus comprises the first management apparatus and a second management apparatus;
determining (S204), when the first management apparatus detects that the first management apparatus is disconnected from the second management apparatus, that the running status of the first management apparatus is an active state or a standby state;
determining (S205), based on a switch condition corresponding to the active state and a switch condition corresponding to the standby state, a switch condition corresponding to the running status of the first management apparatus; and
determining (206), based on a determined connection status corresponding to the at least one reference apparatus, whether the switching condition corresponding to the running status of the first management apparatus is met, wherein the running status of the first management apparatus comprises the active state or the standby state, and a switching condition corresponding to the active state is different from a switching condition corresponding to the standby state; and
when the switching condition corresponding to the running status of the first management apparatus is met, switching (207) between an active state and a standby state for the first management apparatus based on the connection status corresponding to the at least one reference apparatus.

2. The method according to claim 1, wherein the at least one reference apparatus meets at least one of the following conditions:
the at least one reference apparatus comprises apparatuses in a plurality of subnets;
the at least one reference apparatus comprises a plurality of apparatuses whose distances are greater than a distance threshold; and/or
the at least one reference apparatus is managed by multiple processes of a same management apparatus in the active/standby management system.

3. The method according to claim 1 or 2, wherein the determining a connection status corresponding to at least one reference apparatus managed by an active/standby management system comprises:
determining, based on connection information of any reference apparatus in the at least one reference apparatus, at least one target apparatus connected to the any reference apparatus in target duration before a current moment; and
when the at least one target apparatus comprises any management apparatus in the at least one management apparatus, determining that a connection status between the any management apparatus and the any reference apparatus is a connected state; or
when the at least one target apparatus does not comprise the any management apparatus, determining that the connection status between the any management apparatus and the any reference apparatus is a disconnected state.

4. The method according to claim 1 or 2, wherein each management apparatus of the at least one management apparatus is configured to periodically perform a target operation on each of the at least one reference apparatus, and the determining a connection status corresponding to at least one reference apparatus managed by an active/standby management system comprises:
determining, for any management apparatus in the at least one management apparatus and any reference apparatus in the at least one reference apparatus, at least one execution result of the at least one latest target operation performed by the any management apparatus on the any reference apparatus; and
when a quantity of successful execution results in the at least one execution result is greater than a quantity threshold, determining that a connection status between the any one management apparatus and the any one reference apparatus is a connected state; or
when the quantity of successful execution results in the at least one execution result is less than or equal to the quantity threshold, determining that the connection status between the any one management apparatus and the any one reference apparatus is a disconnected state.

5. The method according to claim 4, wherein the target operation comprises at least one of writing data, deleting data, modifying data, and establishing a connection.

6. The method according to claim 1, wherein the switching condition corresponding to the active state comprises: a first connection probability is less than or equal to a probability threshold; and
the switching condition corresponding to the standby state comprises: the first connection probability is greater than the probability threshold, and a second connection probability is less than or equal to the probability threshold, wherein
the first connection probability is a probability of a connection between the first management apparatus and the at least one reference apparatus, and the second connection probability is a probability of a connection between the second management apparatus and the at least one reference apparatus.

7. The method according to claim 1, wherein a management apparatus in the active state in the active/standby management system is configured to periodically set an identifier of the management apparatus in the active state in the at least one reference apparatus, and the at least one management apparatus further comprises a second management apparatus; and
the switching condition corresponding to the active state comprises: the first management apparatus is disconnected from the second management apparatus, and a first connection probability is less than or equal to a probability threshold; or the first management apparatus is disconnected from the second management apparatus, and the first connection probability is greater than the probability threshold, the identifier of the management apparatus in the active state is set in the at least one reference apparatus within a duration threshold before the current moment, and the identifier of the management apparatus in the active state is different from an identifier of the first management apparatus; and
the switching condition corresponding to the standby state comprises: the first management apparatus is disconnected from the second management apparatus, the first connection probability is greater than the probability threshold, and the identifier of the management apparatus in the active state is not set in the at least one reference apparatus within the duration threshold before the current moment, wherein
the first connection probability is a probability of a connection between the first management apparatus and the at least one reference apparatus, and the duration threshold is greater than or equal to a period in which the management apparatus in the active state sets the identifier in the at least one reference apparatus.

8. The method according to any one of claims 1 to 7, wherein the plurality of management apparatuses further comprise the second management apparatus, and the switching between an active state and a standby state for the first management apparatus based on the connection status corresponding to the at least one reference apparatus comprises:
when the first management apparatus is disconnected from the second management apparatus, switching between the active state and the standby state for the first management apparatus based on the connection status corresponding to the at least one reference apparatus.

9. A first management apparatus, comprising:
a determining module, configured to:
determine a connection status corresponding to at least one reference apparatus managed by an active/standby management system, wherein the connection status corresponding to the reference apparatus comprises a connection status between the reference apparatus and at least one management apparatus in the active/standby management system, and the at least one management apparatus comprises the first management apparatus, wherein the at least one management apparatus further comprises a first management apparatus and a second management apparatus;
determine, when the first management apparatus detects that the first management apparatus is disconnected from the second management apparatus, that the running status of the first management apparatus is an active state or a standby state; determine, based on a switch condition corresponding to the active state and a switch condition corresponding to the standby state, a switch condition corresponding to the running status of the first management apparatus;
determine based on a determined connection status corresponding to the at least one reference apparatus, whether the switching condition corresponding to the running status of the first management apparatus is met, wherein the running status of the first management apparatus comprises the active state or the standby state, and a switching condition corresponding to the active state is different from a switching condition corresponding to the standby state; and
a switching module, configured to switch between an active state and a standby state for the first management apparatus based on the connection status corresponding to the at least one reference apparatus when the switching condition corresponding to the running status of the first management apparatus is met.

10. The first management apparatus according to claim 9, wherein the determining module is further configured to
determine, based on connection information of any reference apparatus in the at least one reference apparatus, at least one target apparatus connected to the any reference apparatus in target duration before a current moment; and
when the at least one target apparatus comprises any management apparatus in the at least one management apparatus, determine that a connection status between the any management apparatus and the any reference apparatus is a connected state; or
when the at least one target apparatus does not comprise the any management apparatus, determine that the connection status between the any management apparatus and the any reference apparatus is a disconnected state.

11. The first management apparatus according to claim 9, wherein each management apparatus of the at least one management apparatus is configured to periodically perform a target operation on each of the at least one reference apparatus, and determining module is further configured to
determine, for any management apparatus in the at least one management apparatus and any reference apparatus in the at least one reference apparatus, at least one execution result of the at least one latest target operation performed by the any management apparatus on the any reference apparatus; and
when a quantity of successful execution results in the at least one execution result is greater than a quantity threshold, determine that a connection status between the any one management apparatus and the any one reference apparatus is a connected state; or
when the quantity of successful execution results in the at least one execution result is less than or equal to the quantity threshold, determine that the connection status between the any one management apparatus and the any one reference apparatus is a disconnected state.

12. The first management apparatus according to any one of claims 9 to 11, wherein the switching module is further configured to:
determine, based on the connection status corresponding to the at least one reference apparatus, whether a switching condition corresponding to the running status of the first management apparatus is met, wherein the running status of the first management apparatus comprises the active state or the standby state, and a switching condition corresponding to the active state is different from a switching condition corresponding to the standby state; and
when the switching condition corresponding to the running status of the first management apparatus is met, switch between the active state and the standby state for the first management apparatus.

13. The first management apparatus according to claim 12, wherein the at least one management apparatus further comprises a second management apparatus;
the switching condition corresponding to the active state comprises: a first connection probability is less than or equal to a probability threshold; and
the switching condition corresponding to the standby state comprises: the first connection probability is greater than the probability threshold, and a second connection probability is less than or equal to the probability threshold, wherein
the first connection probability is a probability of a connection between the first management apparatus and the at least one reference apparatus, and the second connection probability is a probability of a connection between the second management apparatus and the at least one reference apparatus.

14. A network system, wherein the network system comprises a active/standby management system, the active/standby management system comprises a first management apparatus and at least one reference apparatus managed by the active/standby management system;
the first management apparatus comprises a processor and a memory, the memory stores instructions which, when executed by the processor, cause the first management apparatus to perform all the steps of the method according to any one of claims 1 to 8**.**

## Patentansprüche

1. Umschaltverfahren für einen Betriebsstatus, das auf eine erste Verwaltungseinrichtung angewendet wird, wobei das Verfahren umfasst:
Bestimmen (S201) eines Verbindungsstatus, der mindestens einer Referenzeinrichtung, die durch ein aktives/Standby-Verwaltungssystem verwaltet wird, entspricht, wobei der Verbindungsstatus, der der Referenzeinrichtung entspricht, einen Verbindungsstatus zwischen der Referenzeinrichtung und mindestens einer Verwaltungseinrichtung in dem aktiven/Standby-Verwaltungssystem umfasst und die mindestens eine Verwaltungseinrichtung die erste Verwaltungseinrichtung und eine zweite Verwaltungseinrichtung umfasst;
Bestimmen (S204), wenn die erste Verwaltungseinrichtung erkennt, dass die erste Verwaltungseinrichtung von der zweiten Verwaltungseinrichtung getrennt ist, dass der Betriebsstatus der ersten Verwaltungseinrichtung ein aktiver Zustand oder ein Standby-Zustand ist;
Bestimmen (S205), basierend auf einer Schaltbedingung, die dem aktiven Zustand entspricht, und einer Schaltbedingung, die dem Standby-Zustand entspricht, einer Schaltbedingung, die dem Betriebsstatus der ersten Verwaltungseinrichtung entspricht; und
Bestimmen (206), basierend auf einem bestimmten Verbindungsstatus, der der mindestens einen Referenzeinrichtung entspricht, ob die Umschaltbedingung, die dem Betriebsstatus der ersten Verwaltungseinrichtung entspricht, erfüllt ist, wobei der Betriebsstatus der ersten Verwaltungseinrichtung den aktiven Zustand oder den Standby-Zustand umfasst und eine Umschaltbedingung, die dem aktiven Zustand entspricht, sich von einer Umschaltbedingung, die dem Standby-Zustand entspricht, unterscheidet; und
wenn die Umschaltbedingung, die dem Betriebsstatus der ersten Verwaltungseinrichtung entspricht, erfüllt ist, Umschalten (207) zwischen einem aktiven Zustand und einem Standby-Zustand für die erste Verwaltungseinrichtung basierend auf dem Verbindungsstatus, der der mindestens einen Referenzeinrichtung entspricht.

2. Verfahren nach Anspruch 1, wobei die mindestens eine Referenzeinrichtung mindestens eine der folgenden Bedingungen erfüllt:
die mindestens eine Referenzeinrichtung umfasst Einrichtungen in einer Vielzahl von Teilnetzen;
die mindestens eine Referenzeinrichtung umfasst eine Vielzahl von Einrichtungen,
deren Entfernungen größer als ein Entfernungsschwellenwert sind; und/oder
die mindestens eine Referenzeinrichtung wird durch mehrere Prozesse einer gleichen Verwaltungseinrichtung in dem aktiven/Standby-Verwaltungssystem verwaltet.

3. Verfahren nach Anspruch 1 oder 2, wobei das Bestimmen eines Verbindungsstatus, der mindestens einer Referenzeinrichtung entspricht, die durch ein aktives/Standby-Verwaltungssystem verwaltet wird, umfasst:
Bestimmen, basierend auf Verbindungsinformationen einer beliebigen Referenzeinrichtung in der mindestens einen Referenzeinrichtung, mindestens einer Zieleinrichtung, die in einer Zieldauer vor einem aktuellen Zeitpunkt mit der beliebigen Referenzeinrichtung verbunden war; und
wenn die mindestens eine Zieleinrichtung eine beliebige Verwaltungseinrichtung in der mindestens einen Verwaltungseinrichtung umfasst, Bestimmen, dass ein Verbindungsstatus zwischen der beliebigen Verwaltungseinrichtung und der beliebigen Referenzeinrichtung ein verbundener Zustand ist; oder
wenn die mindestens eine Zieleinrichtung nicht die beliebige Verwaltungseinrichtung umfasst, Bestimmen, dass der Verbindungsstatus zwischen der beliebigen Verwaltungseinrichtung und der beliebigen Referenzeinrichtung ein getrennter Zustand ist.

4. Verfahren nach Anspruch 1 oder 2, wobei jede Verwaltungseinrichtung der mindestens einen Verwaltungseinrichtung konfiguriert ist, um einen Zielvorgang auf jeder der mindestens einen Referenzeinrichtung periodisch durchzuführen, und das Bestimmen eines Verbindungsstatus, der mindestens einer Referenzeinrichtung entspricht, die durch ein aktives/Standby-Verwaltungssystem verwaltet wird, umfasst:
Bestimmen, für eine beliebige Verwaltungseinrichtung in der mindestens einen Verwaltungseinrichtung und eine beliebige Referenzeinrichtung in der mindestens einen Referenzeinrichtung, mindestens eines Ausführungsergebnisses des mindestens einen letzten Zielvorgangs, der durch die beliebige Verwaltungseinrichtung auf der beliebigen Referenzeinrichtung durchgeführt wurde; und
wenn eine Menge erfolgreicher Ausführungsergebnisse in dem mindestens einen Ausführungsergebnis größer als ein Mengenschwellenwert ist, Bestimmen, dass ein Verbindungsstatus zwischen der beliebigen einen Verwaltungseinrichtung und der beliebigen einen Referenzeinrichtung ein verbundener Zustand ist; oder
wenn eine Menge erfolgreicher Ausführungsergebnisse in dem mindestens einen Ausführungsergebnis kleiner als oder gleich dem Mengenschwellenwert ist, Bestimmen, dass der Verbindungsstatus zwischen der beliebigen einen Verwaltungseinrichtung und der beliebigen einen Referenzeinrichtung ein getrennter Zustand ist.

5. Verfahren nach Anspruch 4, wobei der Zielvorgang mindestens eines von einem Schreiben von Daten, einem Löschen von Daten, einem Ändern von Daten und einem Herstellen einer Verbindung umfasst.

6. Verfahren nach Anspruch 1, wobei die Umschaltbedingung, die dem aktiven Zustand entspricht, umfasst: eine erste Verbindungswahrscheinlichkeit ist kleiner als oder gleich einem Wahrscheinlichkeitsschwellenwert; und
die Umschaltbedingung, die dem Standby-Zustand entspricht, umfasst: die erste Verbindungswahrscheinlichkeit ist größer als der Wahrscheinlichkeitsschwellenwert und eine zweite Verbindungswahrscheinlichkeit ist kleiner als oder gleich dem Wahrscheinlichkeitsschwellenwert, wobei
die erste Verbindungswahrscheinlichkeit eine Wahrscheinlichkeit einer Verbindung zwischen der ersten Verwaltungseinrichtung und der mindestens einen Referenzeinrichtung ist und die zweite Verbindungswahrscheinlichkeit eine Wahrscheinlichkeit einer Verbindung zwischen der zweiten Verwaltungseinrichtung und der mindestens einen Referenzeinrichtung ist.

7. Verfahren nach Anspruch 1, wobei eine Verwaltungseinrichtung in dem aktiven Zustand in dem aktiven/Standby-Verwaltungssystem konfiguriert ist, um eine Kennung der Verwaltungseinrichtung in dem aktiven Zustand in der mindestens einen Referenzeinrichtung periodisch festzusetzen, und die mindestens eine Verwaltungseinrichtung ferner eine zweite Verwaltungseinrichtung umfasst; und
die Umschaltbedingung, die dem aktiven Zustand entspricht, umfasst: die erste Verwaltungseinrichtung ist von der zweiten Verwaltungseinrichtung getrennt und eine erste Verbindungswahrscheinlichkeit ist kleiner als oder gleich einem Wahrscheinlichkeitsschwellenwert; oder die erste Verwaltungseinrichtung ist von der zweiten Verwaltungseinrichtung getrennt und die erste Verbindungswahrscheinlichkeit ist größer als der Wahrscheinlichkeitsschwellenwert, die Kennung der Verwaltungseinrichtung in dem aktiven Zustand ist in der mindestens einen Referenzeinrichtung innerhalb eines Dauerschwellenwerts vor dem aktuellen Zeitpunkt festgesetzt und die Kennung der Verwaltungseinrichtung in dem aktiven Zustand unterscheidet sich von einer Kennung der ersten Verwaltungseinrichtung; und
die Umschaltbedingung, die dem Standby-Zustand entspricht, umfasst: die erste Verwaltungseinrichtung ist von der zweiten Verwaltungseinrichtung getrennt, die erste Verbindungswahrscheinlichkeit ist größer als der Wahrscheinlichkeitsschwellenwert und die Kennung der Verwaltungseinrichtung in dem aktiven Zustand ist in der mindestens einen Referenzeinrichtung innerhalb des Dauerschwellenwerts vor dem aktuellen Zeitpunkt nicht festgesetzt, wobei
die erste Verbindungswahrscheinlichkeit eine Wahrscheinlichkeit einer Verbindung zwischen der ersten Verwaltungseinrichtung und der mindestens einen Referenzeinrichtung ist und der Dauerschwellenwert größer als oder gleich einer Periode, in der die Verwaltungseinrichtung in dem aktiven Zustand die Kennung in der mindestens einen Referenzeinrichtung festsetzt, ist.

8. Verfahren nach einem der Ansprüche 1 bis 7, wobei die Vielzahl von Verwaltungseinrichtungen ferner die zweite Verwaltungseinrichtung umfasst und das Umschalten zwischen einem aktiven Zustand und einem Standby-Zustand für die erste Verwaltungseinrichtung basierend auf dem Verbindungsstatus, der der mindestens einen Referenzeinrichtung entspricht, umfasst:
wenn die erste Verwaltungseinrichtung von der zweiten Verwaltungseinrichtung getrennt wird, Umschalten zwischen dem aktiven Zustand und dem Standby-Zustand für die erste Verwaltungseinrichtung basierend auf dem Verbindungsstatus, der der mindestens einen Referenzeinrichtung entspricht.

9. Erste Verwaltungseinrichtung, die umfasst:
ein Bestimmungsmodul, das konfiguriert ist zum:
Bestimmen eines Verbindungsstatus, der mindestens einer Referenzeinrichtung, die durch ein aktives/Standby-Verwaltungssystem verwaltet wird, entspricht, wobei der Verbindungsstatus, der der Referenzeinrichtung entspricht, einen Verbindungsstatus zwischen der Referenzeinrichtung und mindestens einer Verwaltungseinrichtung in dem aktiven/Standby-Verwaltungssystem umfasst und die mindestens eine Verwaltungseinrichtung die erste Verwaltungseinrichtung umfasst, wobei die mindestens eine Verwaltungseinrichtung ferner eine erste Verwaltungseinrichtung und eine zweite Verwaltungseinrichtung umfasst;
Bestimmen, wenn die erste Verwaltungseinrichtung erkennt, dass die erste Verwaltungseinrichtung von der zweiten Verwaltungseinrichtung getrennt ist, dass der Betriebsstatus der ersten Verwaltungseinrichtung ein aktiver Zustand oder ein Standby-Zustand ist; Bestimmen, basierend auf einer Schaltbedingung, die dem aktiven Zustand entspricht, und einer Schaltbedingung, die dem Standby-Zustand entspricht, einer Schaltbedingung, die dem Betriebsstatus der ersten Verwaltungseinrichtung entspricht;
Bestimmen, basierend auf einem bestimmten Verbindungsstatus, der der mindestens einen Referenzeinrichtung entspricht, ob die Umschaltbedingung, die dem Betriebsstatus der ersten Verwaltungseinrichtung entspricht, erfüllt ist, wobei der Betriebsstatus der ersten Verwaltungseinrichtung den aktiven Zustand oder den Standby-Zustand umfasst und eine Umschaltbedingung, die dem aktiven Zustand entspricht, sich von einer Umschaltbedingung, die dem Standby-Zustand entspricht, unterscheidet; und
ein Umschaltmodul, das konfiguriert ist, um für die erste Verwaltungseinrichtung basierend auf dem Verbindungsstatus, der der mindestens einen Referenzeinrichtung entspricht, zwischen einem aktiven Zustand und einem Standby-Zustand umzuschalten, wenn die Umschaltbedingung, die dem Betriebsstatus der ersten Verwaltungseinrichtung entspricht, erfüllt ist.

10. Erste Verwaltungseinrichtung nach Anspruch 9, wobei das Bestimmungsmodul ferner konfiguriert ist zum:
Bestimmen, basierend auf Verbindungsinformationen einer beliebigen Referenzeinrichtung in der mindestens einen Referenzeinrichtung, mindestens einer Zieleinrichtung, die in der Zieldauer vor einem aktuellen Zeitpunkt mit der beliebigen Referenzeinrichtung verbunden war; und
wenn die mindestens eine Zieleinrichtung eine beliebige Verwaltungseinrichtung in der mindestens einen Verwaltungseinrichtung umfasst, Bestimmen, dass ein Verbindungsstatus zwischen der beliebigen Verwaltungseinrichtung und der beliebigen Referenzeinrichtung ein verbundener Zustand ist; oder
wenn die mindestens eine Zieleinrichtung nicht die beliebige Verwaltungseinrichtung umfasst, Bestimmen, dass der Verbindungsstatus zwischen der beliebigen Verwaltungseinrichtung und der beliebigen Referenzeinrichtung ein getrennter Zustand ist.

11. Erste Verwaltungseinrichtung nach Anspruch 9, wobei jede Verwaltungseinrichtung der mindestens einen Verwaltungseinrichtung konfiguriert ist, um einen Zielvorgang auf jeder der mindestens einen Referenzeinrichtung periodisch durchzuführen, und das Bestimmungsmodul ferner konfiguriert ist zum:
Bestimmen, für eine beliebige Verwaltungseinrichtung in der mindestens einen Verwaltungseinrichtung und eine beliebige Referenzeinrichtung in der mindestens einen Referenzeinrichtung, mindestens eines Ausführungsergebnisses des mindestens einen letzten Zielvorgangs, der durch die beliebige Verwaltungseinrichtung auf der beliebigen Referenzeinrichtung durchgeführt wurde; und
wenn eine Menge erfolgreicher Ausführungsergebnisse in dem mindestens einen Ausführungsergebnis größer als ein Mengenschwellenwert ist, Bestimmen, dass ein Verbindungsstatus zwischen der beliebigen einen Verwaltungseinrichtung und der beliebigen einen Referenzeinrichtung ein verbundener Zustand ist; oder
wenn eine Menge erfolgreicher Ausführungsergebnisse in dem mindestens einen Ausführungsergebnis kleiner als oder gleich dem Mengenschwellenwert ist, Bestimmen, dass der Verbindungsstatus zwischen der beliebigen einen Verwaltungseinrichtung und der beliebigen einen Referenzeinrichtung ein getrennter Zustand ist.

12. Erste Verwaltungseinrichtung nach einem der Ansprüche 9 bis 11, wobei das Umschaltmodul ferner konfiguriert ist zum:
Bestimmen, basierend auf dem Verbindungsstatus, der der mindestens einen Referenzeinrichtung entspricht, ob eine Umschaltbedingung, die dem Betriebsstatus der ersten Verwaltungseinrichtung entspricht, erfüllt ist, wobei der Betriebsstatus der ersten Verwaltungseinrichtung den aktiven Zustand oder den Standby-Zustand umfasst und eine Umschaltbedingung, die dem aktiven Zustand entspricht, sich von einer Umschaltbedingung, die dem Standby-Zustand entspricht, unterscheidet; und
wenn die Umschaltbedingung, die dem Betriebsstatus der ersten Verwaltungseinrichtung entspricht, erfüllt ist, Umschalten zwischen dem aktiven Zustand und dem Standby-Zustand für die erste Verwaltungseinrichtung.

13. Erste Verwaltungseinrichtung nach Anspruch 12, wobei die mindestens eine Verwaltungseinrichtung ferner eine zweite Verwaltungseinrichtung umfasst;
die Umschaltbedingung, die dem aktiven Zustand entspricht, umfasst: eine erste Verbindungswahrscheinlichkeit ist kleiner als oder gleich einem Wahrscheinlichkeitsschwellenwert; und
die Umschaltbedingung, die dem Standby-Zustand entspricht, umfasst: die erste Verbindungswahrscheinlichkeit ist größer als der Wahrscheinlichkeitsschwellenwert und eine zweite Verbindungswahrscheinlichkeit ist kleiner als oder gleich dem Wahrscheinlichkeitsschwellenwert, wobei
die erste Verbindungswahrscheinlichkeit eine Wahrscheinlichkeit einer Verbindung zwischen der ersten Verwaltungseinrichtung und der mindestens einen Referenzeinrichtung ist und die zweite Verbindungswahrscheinlichkeit eine Wahrscheinlichkeit einer Verbindung zwischen der zweiten Verwaltungseinrichtung und der mindestens einen Referenzeinrichtung ist.

14. Netzwerksystem, wobei das Netzwerksystem ein aktives/Standby-Verwaltungssystem umfasst, das aktive/Standby-Verwaltungssystem eine erste Verwaltungseinrichtung und mindestens eine Referenzeinrichtung, die durch das aktive/Standby-Verwaltungssystem verwaltet wird, umfasst;
die erste Verwaltungseinrichtung einen Prozessor und einen Speicher umfasst, wobei der Speicher Anweisungen speichert, die, wenn sie durch den Prozessor ausgeführt werden, die erste Verwaltungseinrichtung veranlassen, alle der Schritte des Verfahrens nach einem der Ansprüche 1 bis 8 durchzuführen.

## Revendications

1. Procédé de commutation d'état de fonctionnement, appliqué à un premier appareil de gestion, dans lequel le procédé comprend :
la détermination (S201) d'un état de connexion correspondant à au moins un appareil de référence géré par un système de gestion actif/en veille, dans lequel l'état de connexion correspondant à l'appareil de référence comprend un état de connexion entre l'appareil de référence et au moins un appareil de gestion dans le système de gestion actif/en veille, et l'au moins un appareil de gestion comprend le premier appareil de gestion et un second appareil de gestion ;
le fait de déterminer (S204), lorsque le premier appareil de gestion détecte que le premier appareil de gestion est déconnecté du second appareil de gestion, que l'état de fonctionnement du premier appareil de gestion est un état actif ou un état de veille ; la détermination (S205), en fonction d'une condition de commutation correspondant à l'état actif et d'une condition de commutation correspondant à l'état de veille, d'une condition de commutation correspondant à l'état de fonctionnement du premier appareil de gestion ; et
le fait de déterminer (206), en fonction d'un état de connexion déterminé correspondant à l'au moins un appareil de référence, si la condition de commutation correspondant à l'état de fonctionnement du premier appareil de gestion est remplie, dans lequel l'état de fonctionnement du premier appareil de gestion comprend l'état actif ou l'état de veille, et une condition de commutation correspondant à l'état actif est différente d'une condition de commutation correspondant à l'état de veille ; et
lorsque la condition de commutation correspondant à l'état de fonctionnement du premier appareil de gestion est remplie, la commutation (207) entre un état actif et un état de veille pour le premier appareil de gestion en fonction de l'état de connexion correspondant à l'au moins un appareil de référence.

2. Procédé selon la revendication 1, dans lequel l'au moins un appareil de référence remplit au moins l'une parmi les conditions suivantes :
l'au moins un appareil de référence comprend des appareils dans une pluralité de sous-réseaux ;
l'au moins un appareil de référence comprend une pluralité d'appareils dont des distances sont supérieures à un seuil de distance ; et/ou
l'au moins un appareil de référence est géré par de multiples processus d'un même appareil de gestion dans le système de gestion actif/en veille.

3. Procédé selon la revendication 1 ou 2, dans lequel la détermination d'un état de connexion correspondant à au moins un appareil de référence géré par un système de gestion actif/en veille comprend :
la détermination, en fonction d'informations de connexion d'un appareil de référence quelconque dans l'au moins un appareil de référence, d'au moins un appareil cible connecté à l'appareil de référence quelconque dans la durée cible avant un moment actuel ; et
lorsque l'au moins un appareil cible comprend un appareil de gestion quelconque dans l'au moins un appareil de gestion, le fait de déterminer qu'un état de connexion entre l'appareil de gestion quelconque et l'appareil de référence quelconque est un état connecté ; ou
lorsque l'au moins un appareil cible ne comprend pas l'appareil de gestion quelconque, le fait de déterminer que l'état de la connexion entre l'appareil de gestion quelconque et l'appareil de référence quelconque est un état déconnecté.

4. Procédé selon la revendication 1 ou 2, dans lequel chaque appareil de gestion de l'au moins un appareil de gestion est configuré pour réaliser périodiquement une opération cible sur chacun de l'au moins un appareil de référence, et la détermination d'un état de connexion correspondant à au moins un appareil de référence géré par un système de gestion actif/en veille comprend :
la détermination, pour un appareil de gestion quelconque dans l'au moins un appareil de gestion et un appareil de référence quelconque dans l'au moins un appareil de référence, d'au moins un résultat d'exécution de l'au moins une dernière opération cible réalisée par l'appareil de gestion quelconque sur l'appareil de référence quelconque ; et
lorsqu'une quantité de résultats d'exécution réussis dans l'au moins un résultat d'exécution est supérieure à un seuil de quantité, le fait de déterminer qu'un état de connexion entre l'appareil de gestion quelconque et l'appareil de référence quelconque est un état connecté ; ou
lorsque la quantité de résultats d'exécution réussis dans l'au moins un résultat d'exécution est inférieure ou égale au seuil de quantité, le fait de déterminer que l'état de connexion entre l'appareil de gestion quelconque et l'appareil de référence quelconque est un état déconnecté.

5. Procédé selon la revendication 4, dans lequel l'opération cible comprend au moins l'un parmi l'écriture de données, la suppression de données, la modification de données et l'établissement d'une connexion.

6. Procédé selon la revendication 1, dans lequel la condition de commutation correspondant à l'état actif comprend : une première probabilité de connexion est inférieure ou égale à un seuil de probabilité ; et
la condition de commutation correspondant à l'état de veille comprend : la première probabilité de connexion est supérieure au seuil de probabilité, et une seconde probabilité de connexion est inférieure ou égale au seuil de probabilité, dans lequel la première probabilité de connexion est une probabilité d'une connexion entre le premier appareil de gestion et l'au moins un appareil de référence, et la seconde probabilité de connexion est une probabilité d'une connexion entre le second appareil de gestion et l'au moins un appareil de référence.

7. Procédé selon la revendication 1, dans lequel un appareil de gestion à l'état actif dans le système de gestion actif/en veille est configuré pour définir périodiquement un identifiant de l'appareil de gestion à l'état actif dans l'au moins un appareil de référence, et l'au moins un appareil de gestion comprend en outre un second appareil de gestion ; et
la condition de commutation correspondant à l'état actif comprend : le premier appareil de gestion est déconnecté du second appareil de gestion, et une première probabilité de connexion est inférieure ou égale à un seuil de probabilité ; ou le premier appareil de gestion est déconnecté du second appareil de gestion, et la première probabilité de connexion est supérieure au seuil de probabilité, l'identifiant de l'appareil de gestion à l'état actif est défini dans l'au moins un appareil de référence dans un seuil de durée avant le moment actuel, et l'identifiant de l'appareil de gestion à l'état actif est différent d'un identifiant du premier appareil de gestion ; et
la condition de commutation correspondant à l'état de veille comprend : le premier appareil de gestion est déconnecté du second appareil de gestion, la première probabilité de connexion est supérieure au seuil de probabilité, et l'identifiant de l'appareil de gestion à l'état actif n'est pas défini dans l'au moins un appareil de référence dans le seuil de durée avant le moment actuel, dans lequel la première probabilité de connexion est une probabilité d'une connexion entre le premier appareil de gestion et l'au moins un appareil de référence, et le seuil de durée est supérieur ou égal à une période pendant laquelle l'appareil de gestion à l'état actif définit l'identifiant dans l'au moins un appareil de référence.

8. Procédé selon l'une quelconque des revendications 1 à 7, dans lequel la pluralité d'appareils de gestion comprend en outre le second appareil de gestion, et la commutation entre un état actif et un état de veille pour le premier appareil de gestion en fonction de l'état de connexion correspondant à l'au moins un appareil de référence comprend :
lorsque le premier appareil de gestion est déconnecté du second appareil de gestion, la commutation entre l'état actif et l'état de veille pour le premier appareil de gestion en fonction de l'état de connexion correspondant à l'au moins un appareil de référence.

9. Premier appareil de gestion, comprenant :
un module de détermination, configuré pour :
déterminer un état de connexion correspondant à au moins un appareil de référence géré par un système de gestion actif/en veille, dans lequel l'état de connexion correspondant à l'appareil de référence comprend un état de connexion entre l'appareil de référence et au moins un appareil de gestion dans le système de gestion actif/en veille, et l'au moins un appareil de gestion comprend le premier appareil de gestion, dans lequel l'au moins un appareil de gestion comprend en outre un premier appareil de gestion et un second appareil de gestion ;
déterminer, lorsque le premier appareil de gestion détecte que le premier appareil de gestion est déconnecté du second appareil de gestion, que l'état de fonctionnement du premier appareil de gestion est un état actif ou un état de veille ; déterminer, en fonction d'une condition de commutation correspondant à l'état actif et d'une condition de commutation correspondant à l'état de veille, une condition de commutation correspondant à l'état de fonctionnement du premier appareil de gestion ;
déterminer, en fonction d'un état de connexion déterminé correspondant à l'au moins un appareil de référence, si la condition de commutation correspondant à l'état de fonctionnement du premier appareil de gestion est remplie, dans lequel l'état de fonctionnement du premier appareil de gestion comprend l'état actif ou l'état de veille, et une condition de commutation correspondant à l'état actif est différente d'une condition de commutation correspondant à l'état de veille ; et
un module de commutation, configuré pour commuter entre un état actif et un état de veille pour le premier appareil de gestion en fonction de l'état de connexion correspondant à l'au moins un appareil de référence lorsque la condition de commutation correspondant à l'état de fonctionnement du premier appareil de gestion est remplie.

10. Premier appareil de gestion selon la revendication 9, dans lequel le module de détermination est en outre configuré pour :
déterminer, en fonction des informations de connexion d'un appareil de référence quelconque dans l'au moins un appareil de référence, au moins un appareil cible connecté à l'appareil de référence quelconque dans la durée cible avant un moment actuel ; et
lorsque l'au moins un appareil cible comprend un appareil de gestion quelconque dans l'au moins un appareil de gestion, déterminer qu'un état de connexion entre l'appareil de gestion quelconque et l'appareil de référence quelconque est un état connecté ; ou
lorsque l'au moins un appareil cible ne comprend pas l'appareil de gestion quelconque, déterminer que l'état de connexion entre l'appareil de gestion quelconque et l'appareil de référence quelconque est un état déconnecté.

11. Premier appareil de gestion selon la revendication 9, dans lequel chaque appareil de gestion de l'au moins un appareil de gestion est configuré pour réaliser périodiquement une opération cible sur chacun de l'au moins un appareil de référence, et le module de détermination est en outre configuré pour :
déterminer, pour un appareil de gestion quelconque dans l'au moins un appareil de gestion et un appareil de référence quelconque dans l'au moins un appareil de référence, au moins un résultat d'exécution de l'au moins une dernière opération cible réalisée par l'appareil de gestion quelconque sur l'appareil de référence quelconque ; et
lorsqu'une quantité de résultats d'exécution réussis dans l'au moins un résultat d'exécution est supérieure à un seuil de quantité, déterminer qu'un état de connexion entre l'appareil de gestion quelconque et l'appareil de référence quelconque est un état connecté ; ou
lorsque la quantité de résultats d'exécution réussis dans l'au moins un résultat d'exécution est inférieure ou égale au seuil de quantité, déterminer que l'état de connexion entre l'appareil de gestion quelconque et l'appareil de référence quelconque est un état déconnecté.

12. Premier appareil de gestion selon l'une quelconque des revendications 9 à 11, dans lequel le module de commutation est en outre configuré pour :
déterminer, en fonction de l'état de connexion correspondant à l'au moins un appareil de référence, si une condition de commutation correspondant à l'état de fonctionnement du premier appareil de gestion est remplie, dans lequel l'état de fonctionnement du premier appareil de gestion comprend l'état actif ou l'état de veille, et une condition de commutation correspondant à l'état actif est différente d'une condition de commutation correspondant à l'état de veille ; et
lorsque la condition de commutation correspondant à l'état de fonctionnement du premier appareil de gestion est remplie, commuter entre l'état actif et l'état de veille pour le premier appareil de gestion.

13. Premier appareil de gestion selon la revendication 12, dans lequel l'au moins un appareil de gestion comprend en outre un second appareil de gestion ;
la condition de commutation correspondant à l'état actif comprend : une première probabilité de connexion est inférieure ou égale à un seuil de probabilité ; et
la condition de commutation correspondant à l'état de veille comprend : la première probabilité de connexion est supérieure au seuil de probabilité, et une seconde probabilité de connexion est inférieure ou égale au seuil de probabilité, dans lequel la première probabilité de connexion est une probabilité d'une connexion entre le premier appareil de gestion et l'au moins un appareil de référence, et la seconde probabilité de connexion est une probabilité d'une connexion entre le second appareil de gestion et l'au moins un appareil de référence.

14. Système de réseau, dans lequel le système de réseau comprend un système de gestion actif/en veille, le système de gestion actif/en veille comprend un premier appareil de gestion et au moins un appareil de référence géré par le système de gestion actif/en veille ;
le premier appareil de gestion comprend un processeur et une mémoire, la mémoire stocke des instructions qui, lorsqu'elles sont exécutées par le processeur, amènent le premier appareil de gestion à réaliser toutes les étapes du procédé selon l'une quelconque des revendications 1 à 8.
